# EUROPÄISCHE PATENTSCHRIFT

(11) **EP 2 895 907 B1**
(45) Veröffentlichungstag und Bekanntmachung des Hinweises auf die Patenterteilung: **15.07.2020**
(21) Anmeldenummer: 13747373.2
(22) Anmeldetag: 02.08.2013
(51) Int. Cl.: G02B 21/00, G02B 21/36, G02B 27/58

(54) **OPTIKANORDNUNG UND LICHTMIKROSKOP**
OPTICAL ARRANGEMENT AND LIGHT MICROSCOPE
DISPOSITIF OPTIQUE ET MICROSCOPE OPTIQUE

(30) Priorität: 11.09.2012 DE 102012017922
(43) Veröffentlichungstag der Anmeldung: 22.07.2015
(73) Patentinhaber: Carl Zeiss Microscopy GmbH, 07745 Jena (DE)
(72) Erfinder: KALKBRENNER, Thomas, 07745 Jena (DE); KRAMPERT, Gerhard, Pleasanton, CA 94566 (US); NETZ, Ralf, 07745 Jena (DE)
(74) Vertreter: Loritz, Rainer
(86) Internationale Anmeldenummer: PCT/EP2013/066314
(87) Internationale Veröffentlichungsnummer: WO 2014/040800

(56) Entgegenhaltungen:
- WO-A1-2012/118436
- DE-A1- 10 257 237
- DE-A1-102007 018 048
- JP-A- 2007 279 287
- US-A1- 2012 026 311

## Beschreibung

Die vorliegende Erfindung betrifft in einem ersten Aspekt eine Optikanordnung zum Positionieren in einem Strahlengang eines Lichtmikroskops nach dem Oberbegriff des Anspruchs 1. In einem weiteren Gesichtspunkt bezieht sich die Erfindung auf ein Lichtmikroskop nach dem Oberbegriff des Anspruchs 13.

Ein gattungsgemäßes Lichtmikroskop weist eine Probenebene auf, in welcher eine zu untersuchende Probe positionierbar ist, und mindestens eine Lichtquelle zum Aussenden von Licht in Richtung der Probenebene. Von der Probe kommendes Licht kann sodann zum Aufzeichnen eines Probenbilds mit einer Detektionseinrichtung nachgewiesen werden.

Eine etablierte Methode zum Untersuchen einer Probe mit hoher Auflösung ist die Mikroskopie mit strukturierter Beleuchtung (structured illumination microscopy, SIM). Dabei wird eine Probe durch strukturiertes Beleuchtungslicht bestrahlt. Hierunter kann beliebiges Licht mit einer räumlich variablen Intensitätsverteilung über den Strahlquerschnitt verstanden werden. Insbesondere kann Licht mit einer periodischen Intensitätsverteilung über den Querschnitt eingesetzt werden, beispielsweise ein Linienmuster mit beleuchteten und nicht beleuchteten Linien.

Zur Erzeugung strukturierter Beleuchtung kann eine gattungsgemäße Optikanordnung genutzt werden, die in einen Strahlengang des Lichtmikroskops zwischen der Lichtquelle und der Probenebene eingebracht wird. Die gattungsgemäße Optikanordnung weist mindestens eine erste und eine zweite optische Baugruppe zum Bereitstellen von strukturiertem Beleuchtungslicht aus auftreffendem Licht auf.

Die optischen Baugruppen können beispielsweise Gitter sein. Abbildungen der Gitter werden nacheinander in der Probenebene erzeugt. Zu verschiedenen Gitterausrichtungen werden Probenbilder aufgenommen, aus denen ein Probenbild mit erhöhter Auflösung berechnet werden kann.

Diese erhöhte Auflösung stellt einen beträchtlichen Vorteil gegenüber der herkömmlichen Aufnahme von Weitfeldbildern ohne strukturierte Beleuchtung dar. Jedoch ist der Zeitaufwand zur Bildaufnahme bei strukturierter Beleuchtung höher. Ein grundlegendes Ziel kann daher darin gesehen werden, die benötigte Zeit zur Bildaufnahme gering zu halten. Der apparative Aufbau soll dabei möglichst einfach zu realisieren und kostengünstig sein.

Bekannte Optikanordnungen erfüllen diese Anforderungen nicht.

So ist es bekannt, zum Abbilden verschiedener Gitterorientierungen an der Probe ein einziges Gitter einzusetzen und dieses in verschiedene Orientierungen zu drehen. Auch können hinter dem Gitter ein optischer Bildfeldrotator eingesetzt werden, beispielsweise ein Abbe-König-Prisma. Hiermit kann eine Bildfelddrehung und somit eine Rotation der Gitterabbildung an der Probenebene erzeugt werden. Die Drehung eines Gitters oder eines Bildfeldrotators ist aber verhältnismäßig zeitaufwändig. Zudem können unter Umständen störende Reflexe von Beugungslicht auftreten.

Alternativ kann eine optische Strahlteilung zur Erzeugung der interferierenden Strahlen erfolgen, was jedoch apparativ kompliziert und problematisch im Hinblick auf die Stabilität sein kann.

Weiterhin ist es bekannt, superponierte unterschiedlich ausgerichtete Gitter auf einem Substrat vorzusehen. Licht einer gewünschten Beugungsordnung wird zur Probe geleitet, während andere Beugungsordnungen ausgeblendet werden. Dadurch ist der Intensitätsverlust jedoch hoch.

Schließlich können auch mehrere unterschiedlich ausgerichtete Gitter vorgesehen sein. Diese werden nacheinander durch einen motorischen Gitterwechsler ausgewählt. Der Zeitbedarf zum Wechseln zwischen den Gittern ist hier jedoch ebenfalls hoch.

Im Gesamten weisen somit bekannte Optikanordnungen eine hohe Totzeit zum Wechseln zwischen zwei Gitterorientierungen auf und/oder stellen hohe mechanische Anforderungen, beispielsweise hinsichtlich einer hohen Positioniergenauigkeit von beweglichen optischen Komponenten. Zudem können unerwünschte Intensitätsverluste des Beleuchtungslichts eintreten.

DE 10 2007 018 048 A1 offenbart eine Optikanordnung mit einer Maskenstruktur, welche auftreffendem Licht eine räumliche Intensitätsstrukturierung aufprägt. Die Maskenstruktur kann sowohl zur Reflexion als auch zur Transmission von Licht genutzt werden, womit unterschiedliche Lichtverteilungen auswählbar sind. DE 102 57 237 A1 beschreibt eine Optikanordnung für ein Lichtmikroskop. In der Nähe einer Pupillenebene sind Mittel zur räumlichen Trennung von Beleuchtungslicht und Detektionslicht vorhanden. Diese Mittel können ein Spiegel mit lichtreflektierenden und lichtdurchlässigen Bereichen sein. US 2012/0026311 A1 und JP 2007 279287 A beschreiben jeweils eine Optikanordnung mit einem Gitter zum Erzeugen von strukturiertem Beleuchtungslicht. WO 2012/118436 A1 beschreibt eine Optikanordnung mit einem Strahlteiler und einem Drehspiegel, welcher auftreffendes Licht wahlweise auf einen von mehreren Spiegelclustern lenkt, welche als Bildfelddreher wirken.

Als eine **Aufgabe** der Erfindung kann angesehen werden, eine Optikanordnung und ein Lichtmikroskop bereitzustellen, mit denen eine gute Bildqualität und ein schneller Wechsel zwischen verschiedenen Gitterabbildungen zum Erzeugen von strukturiertem Beleuchtungslicht bei einfachem Aufbau ermöglicht wird.

Die Aufgabe wird durch die Optikanordnung mit den Merkmalen des Anspruchs 1 und das Lichtmikroskop mit den Merkmalen des Anspruchs 13 gelöst.

Bevorzugte Ausführungsvarianten der erfindungsgemäßen Optikanordnung und des erfindungsgemäßen Lichtmikroskops sind Gegenstand der abhängigen Ansprüche und werden in der folgenden Beschreibung, insbesondere im Zusammenhang mit den Figuren, erläutert.

Eine Optikanordnung der oben genannten Art ist erfindungsgemäß dadurch gekennzeichnet, dass Licht über unterschiedliche Strahlengänge zu den verschiedenen optischen Baugruppen und weiter in Richtung einer Probe leitbar ist, dass elektronische Steuerungsmittel vorhanden und dazu eingerichtet sind, von den unterschiedlichen Strahlengängen zu verschiedenen optischen Baugruppen jeweils einen Strahlengang zu einer Zeit zu beleuchten, dass mindestens ein erster Strahlvereinigungsspiegel vorhanden ist zum Leiten von Licht, das von verschiedenen optischen Baugruppen kommt, auf einen gemeinsamen Strahlengang in Richtung einer Probe, dass der erste Strahlvereinigungsspiegel reflektierende Bereiche aufweist, auf die nur Licht von einer der beiden optischen Baugruppen trifft, und dass der erste Strahlvereinigungsspiegel lichtdurchlässige Bereiche aufweist, auf die nur Licht von der anderen der optischen Baugruppen trifft.

Bei einem Lichtmikroskop der oben genannten Art ist erfindungsgemäß zwischen der Lichtquelle und der Probenebene eine erfindungsgemäße Optikanordnung vorhanden.

Als ein erster Kerngedanke der Erfindung kann angesehen werden, dass zur Auswahl einer optischen Baugruppe zum Bereitstellen von strukturiertem Beleuchtungslicht kein Bewegen der optischen Baugruppe erforderlich ist. Im Gegensatz zu herkömmlichen Optikanordnungen wird eine optische Baugruppe also nicht durch Bewegen in einen ortsfesten Strahlengang ausgewählt. Vielmehr kann Licht über räumlich unterschiedliche Strahlengänge zu den optischen Baugruppen geführt werden. Die erforderliche Zeit zum Auswählen eines dieser Strahlengänge kann mit einer Umlenkrichtung für Licht sehr gering sein.

Von den unterschiedlichen Strahlengängen zu jeweils einer der optischen Baugruppen wird zu jeder Zeit nur einer beleuchtet. Indem die Strahlengänge nacheinander beleuchtet werden, kann an der Probenebene eine strukturierte Beleuchtung mit verschiedener Orientierung und/oder Phasenschiebung erzeugt werden. Für jeden der Strahlengänge können ein oder mehrere Bilder der Probe aufgenommen werden, aus welchen ein höher auflösendes Bild berechnet werden kann.

Als ein weiterer grundlegender Gedanke der Erfindung kann angesehen werden, dass zum Zusammenführen der unterschiedlichen Strahlengänge, in welchen sich die verschiedenen optischen Baugruppen befinden, mindestens ein Strahlvereinigungsspiegel vorgesehen ist, der über seine Querschnittsfläche reflektierende Bereiche und hiervon verschiedene lichtdurchlässige Bereiche aufweist. Gegenüber herkömmlichen Polarisationswürfeln oder Neutralteilern zur Strahlvereinigung sind Lichtverluste bei den Strahlvereinigungsspiegeln der Erfindung deutlich geringer. Im Vergleich zu schaltbaren Galvanometerspiegeln zur Strahlvereinigung können die Strahlvereinigungsspiegel mit keinem oder nur geringem elektronischen Aufwand betrieben werden.

Jeder Strahlvereinigungsspiegel ist außerhalb von Ebenen angeordnet, die zur Probenebene optisch konjugiert sind. Werden zur Erzeugung von strukturiertem Beleuchtungslicht beispielsweise Gitter in einer zur Probenebene optisch konjugierten Ebene eingesetzt, so wird an diesen Gittern Licht in verschiedene Beugungsordnungen gebeugt und auf den ersten Strahlvereinigungsspiegel geleitet. Dabei trifft Licht nur auf bestimmte Bereiche des Strahlvereinigungsspiegels, welche durch die Beugungsordnungen an den Gittern bestimmt sind. Die Orientierung eines Gitters bestimmt die Lage der ersten Beugungsordnung von Licht am ersten Strahlvereinigungsspiegel. Für mehrere unterschiedlich orientierte Gitterabbildungen liegen daher Lichtanteile der ersten Beugungsordnung der verschiedenen Gitterabbildungen bei einem gemeinsamen Strahlengang nicht übereinander. Somit können durch die reflektierenden Bereiche und die lichtdurchlässigen Bereiche des Strahlvereinigungsspiegels mehrere Strahlengänge mit sehr geringen Lichtverlusten kombiniert werden. Vorteilhafterweise ist zudem für das Zusammenführen der verschiedenen Strahlengänge keine mechanische Bewegung erforderlich.

Bei einer bevorzugten Ausgestaltung der erfindungsgemäßen Optikanordnung weisen die optischen Baugruppen jeweils ein Gitter auf. Grundsätzlich sind auch Reflexionsgitter möglich, bevorzugt sind aber Transmissionsgitter. Zum Erzeugen von strukturiertem Beleuchtungslicht unterschiedlicher Orientierungen können die Gitter in unterschiedlichen Orientierungen zueinander angeordnet sein. Die Richtungen der Gitterstäbe verschiedener Gitter sind also zueinander um die Hauptausbreitungsrichtung des auftreffenden Lichts gedreht.

Zusätzlich zu einem Gitter können optische Baugruppen auch jeweils einen Bildfeldrotator aufweisen. Mit einem solchen wird die Abbildung des zugehörigen Gitters an der Probenebene um einen bestimmten Winkel gedreht. Eine der optischen Baugruppen kann dabei durch ein einzelnes Gitter und alle übrigen optischen Baugruppen durch jeweils ein Gitter und einen, insbesondere feststehenden, Bildfeldrotator gebildet sein.

Durch verschiedene optische Baugruppen bereitgestellte strukturierte Beleuchtung kann sich in der Orientierung und/oder Phasenlage des erzeugten strukturierten Beleuchtungslichts unterscheiden. Das strukturierte Beleuchtungslicht kann beispielsweise an der Probenebene ein Linienmuster bilden. Die Orientierung gibt in diesem Fall die Richtung der Linien an. Die Phase oder Phasenlage der strukturierten Beleuchtung kennzeichnet dabei die Lage der Linien in einer Richtung senkrecht zum Verlauf der Linien.

Bei einer anderen Ausführungsvariante der erfindungsgemäßen Optikanordnung kann bereits ein einzelnes Gitter genügen. Hierbei ist ein Gitter zum Erzeugen von strukturiertem Beleuchtungslicht in einem gemeinsamen Strahlengang vor den unterschiedlichen Strahlengängen zu den verschiedenen optischen Baugruppen angeordnet. Die optischen Baugruppen weisen jeweils einen, insbesondere feststehenden, Bildfeldrotator auf, wobei mit unterschiedlichen Bildfeldrotatoren strukturiertes Beleuchtungslicht in unterschiedlichen Orientierungen bereitgestellt wird.

Bei einer besonders bevorzugten Ausgestaltung der erfindungsgemäßen Optikanordnung ist vorgesehen, dass mindestens eine dritte optische Baugruppe zum Erzeugen von strukturiertem Beleuchtungslicht aus auftreffendem Licht vorhanden ist, dass ein zweiter Strahlvereinigungsspiegel vorhanden ist zum Leiten von Licht, das von der zweiten und dritten optischen Baugruppe kommt, auf einen gemeinsamen Strahlengang zum ersten Strahlvereinigungsspiegel, dass der zweite Strahlvereinigungsspiegel reflektierende Bereiche aufweist, auf die nur Licht von der zweiten optischen Baugruppe trifft, und lichtdurchlässige Bereiche, auf die nur Licht von der dritten optischen Baugruppe trifft, oder umgekehrt. Erzeugen die mindestens drei optischen Baugruppen strukturiertes Beleuchtungslicht in unterschiedlichen Orientierungen, kann eine Auflösungssteigerung in allen Richtungen innerhalb der Probenebene erreicht werden. Für jede weitere optische Baugruppe mit separatem Strahlengang kann ein weiterer Strahlvereinigungsspiegel vorhanden sein. Dessen reflektierende und lichtdurchlässige Bereiche sind entsprechend denen des ersten und zweiten Strahlvereinigungsspiegels gestaltet. Dabei sind die reflektierenden Bereiche verschiedener Strahlvereinigungsspiegel in einer Ebene senkrecht zur optischen Achse, entlang welcher sich Licht zwischen den Strahlvereinigungsspiegeln ausbreitet, zueinander versetzt. Insbesondere können die reflektierenden Bereiche verschiedener Strahlvereinigungsspiegel zueinander um die optische Achse gedreht sein. Dabei kann ein Drehwinkel zwischen Strahlvereinigungsspiegeln gleich einem Drehwinkel zwischen verschiedenen Orientierungen der Gitterabbildungen sein.

Um Lichtverluste an den Strahlvereinigungsspiegeln möglichst gering zu halten, sollte über die Querschnittsfläche eines Strahlvereinigungsspiegels Licht eines Gitters möglichst wenig Überlapp mit Licht eines anderen Gitters haben. Hierzu sind alle Strahlvereinigungsspiegel außerhalb von Ebenen angeordnet, die optisch konjugiert zu den Ebenen der Gitter sind.

Bevorzugt ist einer der Strahlvereinigungsspiegel in einer Ebene angeordnet, in der eine Lichtverteilung als Fourier-Transformierte der Lichtverteilung an den Gittern bestimmt ist. Alternativ können zwei Strahlvereinigungsspiegel auf verschiedenen Seiten dieser Ebene angeordnet sein. Befinden sich die Gitter in einer Zwischenbildebene des Lichtmikroskops, so ist die genannte Ebene folglich die Pupillenebene des Lichtmikroskops.

Damit durch strukturiertes Beleuchtungslicht verschiedener Gitter derselbe Probenbereich untersucht wird, werden die verschiedenen Strahlengänge durch die Strahlvereinigungsspiegel auf einen gemeinsamen Strahlengang vereint. Hierdurch trifft Licht der nullten Beugungsordnung von verschiedenen Gittern auf denselben Bereich eines Strahlvereinigungsspiegels. Der erste Strahlvereinigungsspiegel ist so angeordnet, dass Licht, welches in eine nullte Beugungsordnung gebeugt und über den Strahlengang der ersten optischen Baugruppe geleitet wird, auf einen zentralen Bereich des ersten Strahlvereinigungsspiegels trifft und dass Licht, welches in eine nullte Beugungsordnung gebeugt und über den Strahlengang der zweiten optischen Baugruppe geleitet wird, auf den zentralen Bereich trifft, wobei der zentrale Bereich teildurchlässig ist. Somit wird Licht der nullten Beugungsordnung von verschiedenen Gittern jeweils teilweise von dem ersten Strahlvereinigungsspiegel in Richtung der Probe weitergeleitet. Unter der Teildurchlässigkeit soll verstanden werden, dass ein Anteil von auftreffendem Licht transmittiert und ein Anteil reflektiert wird. Eine Absorption von Licht soll möglichst gering sein. Bevorzugt ist der Grad der Teildurchlässigkeit so gewählt, dass Licht von verschiedenen Gittern oder optischen Baugruppen zu vergleichbaren, insbesondere gleichen, Anteilen in Richtung der Probe weitergeleitet wird. Bei gemeinsamer Betrachtung aller Strahlvereinigungsspiegel sind demnach Lichtverluste durch die Strahlvereinigungsspiegel für alle Strahlengänge zu verschiedenen optischen Baugruppen gleich groß.

In entsprechender Weise kann vorgesehen sein, dass auch alle übrigen Strahlvereinigungsspiegel einen teildurchlässigen zentralen Bereich aufweisen. Insbesondere kann der zweite Strahlvereinigungsspiegel so angeordnet sein, dass Licht, welches in eine nullte Beugungsordnung gebeugt und über den Strahlengang der zweiten optischen Baugruppe geleitet wird, auf einen zentralen Bereich des zweiten Strahlvereinigungsspiegels trifft und dass Licht, welches in eine nullte Beugungsordnung gebeugt und über den Strahlengang der dritten optischen Baugruppe geleitet wird, auf den zentralen Bereich des zweiten Strahlvereinigungsspiegels trifft. Hierbei ist der zentrale Bereich des zweiten Strahlvereinigungsspiegels teildurchlässig und der zentrale Bereich des ersten Strahlvereinigungsspiegels weist bevorzugt eine höhere Lichtdurchlässigkeit als der zentrale Bereich des zweiten Strahlvereinigungsspiegels auf. In anderen Worten sind die Grade der Teildurchlässigkeit der zentralen Bereiche verschiedener Strahlvereinigungsspiegel unterschiedlich und können so gewählt sein, das Licht der nullten Beugungsordnung von verschiedenen optischen Baugruppen zu gleichen Anteilen oder Lichtintensitäten durch die Strahlvereinigungsspiegel in Richtung der Probe geleitet werden.

Werden mehrere Strahlvereinigungsspiegel in Reihe angeordnet, so werden die Reflexionsgrade und Lichtdurchlässigkeiten der zentralen Bereiche bevorzugt wie folgt gewählt: Der hinterste Strahlvereinigungsspiegel, der von der Probenebene am weitesten entfernt ist, kann einen Reflexionsgrad von 1/2 und entsprechend eine Lichtdurchlässigkeit von 1/2 aufweisen. Der zentrale Bereich des darauf folgenden Strahlvereinigungsspiegels hat bevorzugt einen Reflexionsgrad von 1/3 und eine Lichtdurchlässigkeit von 2/3. Allgemein formuliert hat bei einer Zählung ab dem hintersten Strahlvereinigungsspiegel ein n-ter Strahlvereinigungsspiegel bevorzugt einen Reflexionsgrad von 1/(n+1) und eine Lichtdurchlässigkeit von n/(n+1).

Wegen unerwünschter Absorptions- und Streueffekte können in der Praxis die Reflexionsgrade und Lichtdurchlässigkeiten von den oben genannten Werten abweichen, wobei die Abweichung zweckmäßigerweise nicht 20% des jeweiligen Werts übersteigen sollte.

Die Probe sollte unabhängig von der Auswahl, welcher der Strahlengänge zu den verschiedenen optischen Baugruppen beleuchtet wird, möglichst mit gleicher Lichtintensität bestrahlt werden. Hierzu können die reflektierenden und die lichtdurchlässigen Bereiche der Strahlvereinigungsspiegel so angeordnet sein und die Lichtdurchlässigkeiten der zentralen Bereiche der Strahlvereinigungsspiegel so gewählt sein, dass an den Strahlvereinigungsspiegeln die prozentualen Lichtverluste bezogen auf die Eingangsintensität gleich sind für Lichtbündel, die von verschiedenen optischen Baugruppen kommen. Die Eingangsintensität kann dabei vor Durchlaufen der jeweiligen optischen Baugruppe bestimmt sein.

Zum Erzeugen von Gitterabbildungen verschiedener Orientierung an der Probenebene kann vorgesehen sein, dass die optischen Baugruppen Bildfeldrotatoren und/oder Gitter in verschiedenen Orientierungen zueinander aufweisen. Wegen der verschiedenen Orientierungen trifft Licht, das vom ersten Gitter in einer ersten Beugungsordnung gebeugt wird, und Licht, das vom zweiten Gitter in einer ersten Beugungsordnung gebeugt wird, am ersten Strahlvereinigungsspiegel auf unterschiedliche Bereiche. Diese unterschiedlichen Bereiche sind durch die reflektierenden und die lichtdurchlässigen Bereiche gebildet, so dass Licht der ersten Beugungsordnung von sowohl dem ersten Gitter als auch dem zweiten Gitter in Richtung der Probenebene weitergeleitet wird.

Ein reflektierender Bereich soll möglichst vollständig reflektierend sein und kann beispielsweise einen Reflexionsgrad von größer als 80% oder 90% aufweisen. Entsprechend sollen die lichtdurchlässigen Bereiche, die auch durch einen zusammenhängenden lichtdurchlässigen Bereich gebildet sein können, möglichst vollständig lichtdurchlässig sein und können beispielsweise mindestens 80% oder 90% von auftreffendem Licht transmittieren. Hingegen soll ein zentraler Bereich einen kleineren Reflexionsgrad als die reflektierenden Bereiche und eine geringere Lichtdurchlässigkeit als die lichtdurchlässigen Bereiche aufweisen.

Bei den beschriebenen Ausführungsformen wird somit zur Strahlvereinigung genutzt, dass die Lage von Licht einer ersten Beugungsordnung von einer Orientierung des zugehörigen Gitters und eines eventuell dahinter angeordneten Bildfeldrotators abhängt. Bevorzugt weist jeder Strahlvereinigungsspiegel zwei reflektierende Bereiche auf, die einander gegenüberliegend zum zentralen Bereich angeordnet sind. Um Licht der ersten Beugungsordnung anderer Gitter durchzulassen, bilden die beiden reflektierenden Bereiche eines Strahlvereinigungsspiegels keinen geschlossenen Ringbereich. Vielmehr bedecken sie von einem solchen Ringbereich höchstens einen Anteil von 1/N bei einer Anzahl von N zu vereinigenden Strahlen.

Damit ein Probenbild erhöhter Auflösung in möglichst kurzer Zeit aufgenommen werden kann, sollte zwischen den unterschiedlichen Strahlengängen zu verschiedenen optischen Baugruppen in kurzer Zeit umgeschaltet werden können. Zum Auswählen eines zu beleuchtenden Strahlengangs ist eine verstellbare Umlenkeinrichtung vorhanden, mit der Licht auswählbar auf eine der optischen Baugruppen umlenkbar ist. Bevorzugt weist die Umlenkeinrichtung einen Umlenkspiegel auf, der drehbar und/oder verschiebbar ist. Beispielsweise kann der Umlenkspiegel durch ein mikroelektromechanisches System (MEMS) oder durch einen Galvanometer-Scanspiegel ausgeführt sein. Hierdurch kann eine beträchtliche Zeitersparnis beim Wechsel zwischen verschiedenen zu beleuchtenden Strahlengängen erreicht werden, insbesondere gegenüber herkömmlichen Optikanordnungen, bei welchen die optische Baugruppe selbst in den Strahlengang verfahren wird.

Der Umlenkspiegel kann eine geringere Masse und geringere Abmessungen als die optischen Baugruppen aufweisen, wodurch ein schnelleres Verstellen möglich wird. Zudem ist die erforderliche Positionsänderung bei dem Umlenkspiegel geringer als bei dem Fall, dass eine gesamte optische Baugruppe in den Strahlengang ein- oder ausgefahren wird.

Prinzipiell kann Licht von der Umlenkeinrichtung zu den verschiedenen optischen Baugruppen als Freistrahl geführt werden, das heißt ohne Verwendung von Lichtwellenleitern. Bevorzugt sind aber Lichtwellenleiter vorgesehen. Dabei ist die Umlenkeinrichtung dazu eingerichtet, Licht einstellbar auf einen der Lichtwellenleiter und weiter zu einer der optischen Baugruppen zu lenken. Vorteilhafterweise leiten Lichtwellenleiter Licht nicht-abbildend, wodurch Optiken mit kleineren Querschnittsflächen eingesetzt werden können. Insbesondere kann der Umlenkspiegel kleiner ausgeführt sein, was schnellere Umschaltzeiten ermöglicht.

Bei einer bevorzugten Ausgestaltung sind die Lichtwellenleiter polarisationserhaltend und jeder Lichtwellenleiter ist in einer axialen Rotationsausrichtung angeordnet, bei welcher eine Polarisationsrichtung von austretendem Licht senkrecht zu einer Richtung der Gitterstäbe eines Gitters ist, auf welches das Licht, das aus dem jeweiligen Lichtwellenleiter austritt, gelangt. Die axiale Rotationsausrichtung soll durch einen Drehwinkel um eine Hauptausbreitungsrichtung von austretendem Licht verstanden werden. Indem die Polarisationsrichtung des Lichts abhängig von der Orientierung des Gitters, zu dem das Licht geleitet wird, eingestellt wird, kann ein besonders hoher Modulationskontrast in der Probenebene erzeugt werden.

Prinzipiell können Lichtverluste an verschiedenen Lichtwellenleitern unterschiedlich hoch sein. Dies kann beispielsweise durch verschiedene Auftreffwinkel von Licht, welches von der Umlenkeinrichtung kommt, bedingt sein. Dennoch soll die Intensität von austretendem Licht für alle Lichtwellenleiter möglichst gleich sein. Um dies zu erreichen, kann vorgesehen sein, dass eine akusto-optische Vorrichtung vor den Lichtwellenleitern vorhanden ist und dass die elektronischen Steuerungsmittel dazu eingerichtet sind, mit der akusto-optischen Vorrichtung eine Intensität von Licht abhängig davon zu variieren, zu welchem Lichtwellenleiter das Licht weitergeleitet wird, so dass mit allen Lichtwellenleitern eine gleiche Lichtintensität ausgegeben wird oder so dass hinter den Strahlvereinigungsspiegeln, das heißt zwischen den Strahlvereinigungsspiegeln und der Probenebene, Lichtbündel, die von verschiedenen optischen Baugruppen kommen, die gleiche Lichtintensität aufweisen. Hierzu geeignete Einstellungen für die akusto-optische Vorrichtung können vorab in einer Testmessung bestimmt werden. Mit einer akusto-optischen Vorrichtung, beispielsweise einem akusto-optischen durchstimmbaren Filter (AOTF) kann vorteilhafterweise in besonders kurzer Zeit eine Intensitätsanpassung erfolgen. Findet dies während einer Umschaltzeit der Umlenkeinrichtung statt, wird eine Messunterbrechungszeit, die durch Umstellen der Umlenkeinrichtung bedingt ist, nicht verlängert.

Prinzipiell kann für jeden der Strahlengänge zu verschiedenen optischen Baugruppen eine separate Lichtleitfaser vorhanden sein. Über eine Polarisationskodierung kann jedoch auch Licht über eine einzige Lichtleitfaser auswählbar zu einer von zwei optischen Baugruppen geleitet werden. Dadurch können weniger Lichtleitfasern als Strahlengänge zu verschiedenen optischen Baugruppen vorhanden sein. Bei dieser Ausführung ist vorgesehen, dass mit der Umlenkeinrichtung Licht auf einem ersten sowie einem zweiten Strahlengang zu einer ersten Lichtleitfaser umlenkbar ist, dass im ersten Strahlengang polarisationsändernde Mittel angeordnet sind zum Erzeugen einer Polarisationsrichtung von Licht, welche senkrecht zu einer Polarisationsrichtung von Licht auf dem zweiten Strahlengang steht, dass ein Polarisationswürfel zum Zusammenführen des ersten und des zweiten Strahlengangs vorhanden ist, dass die erste Lichtleitfaser so angeordnet ist, dass der vom Polarisationswürfel zusammengeführte Strahlengang auf die erste Lichtleitfaser trifft, und dass hinter der ersten Lichtleitfaser ein Polarisationsstrahlteiler angeordnet ist, der das Licht abhängig von dessen Polarisationsrichtung auf einen Strahlengang zu einer bestimmten optischen Baugruppe oder auf einen anderen Strahlengang zu einer anderen der optischen Baugruppen leitet. Als Polarisationswürfel können prinzipiell beliebige Mittel eingesetzt werden, die Licht aus verschiedenen Richtungen und senkrechter Polarisierung auf einen gemeinsamen Strahlengang zusammenführen.

Zweckmäßigerweise können auf einem oder auf beiden der Strahlengänge zwischen dem Polarisationsstrahlteiler und den beiden optischen Baugruppen polarisationsändernde Mittel angeordnet sein. Diese können beispielsweise eine λ/2-Platte umfassen, welche in einem Drehwinkel angeordnet ist, durch den eine Polarisationsrichtung von durchlaufendem Licht senkrecht zu einer Richtung der Gitterstäbe des Gitters hinter der λ/2-Ptatte steht.

Um ein hochauflösendes Bild mit strukturierter Beleuchtung zu berechnen, werden zweckmäßigerweise mehrere Probenbilder mit unterschiedlich orientierten Gitterabbildungen aufgenommen sowie mehrere Bilder, bei denen eine Gitterabbildung bei gleicher Orientierung verschoben, das heißt phasenverschoben, wird. Bevorzugt werden über die Gitter und/oder Bildfeldrotatoren der verschiedenen optischen Baugruppen verschieden orientierte Gitterabbildungen erzeugt. Eine Phasenverschiebung kann dann durch Verschieben der optischen Baugruppen erfolgen.

Es ist bevorzugt, dass zum Ändern einer strukturierten Beleuchtung, die mit einer der optischen Baugruppen bereitgestellt wird, Stelleinrichtungen zum Bewegen der optischen Baugruppen unabhängig voneinander vorhanden sind, dass die elektronischen Steuerungsmittel dazu eingerichtet sind, zur Reduzierung einer Messunterbrechungszeit eine der optischen Baugruppen zu bewegen, während ein Strahlengang zu einer anderen der optischen Baugruppen ausgewählt ist. Direkt aufeinanderfolgende Aufnahmen von Probenbildern erfolgen also über unterschiedliche Strahlengänge und folglich für verschieden orientierte Gitterabbildungen, und nicht etwa für verschiedene Phasenverschiebungen über denselben Strahlengang.

Die Stelleinrichtungen können durch Motoren ausgeführt sein, umfassen bevorzugt aber Aktuatoren wie zum Beispiel piezoelektrische Aktuatoren, oder Galvanometer. Zur Phasenschiebung werden die optischen Baugruppen quer zu einer Linienrichtung des jeweils abzubildenden Gitters verschoben. Prinzipiell können die optischen Baugruppen auch gedreht werden, um eine Abbildung einer Gitterausrichtung zu drehen. Hierbei kann vorgesehen sein, die Strahlvereinigungsspiegel in gleicher Weise zu drehen.

Zur Phasenschiebung einer strukturierten Beleuchtung, die mit einer der optischen Baugruppen bereitgestellt wird, kann auch mindestens eine Phasenplatte vorhanden sein, die in verschiedene Einstellungen gebracht werden kann, in welchen sie eine Phase von strukturiertem Beleuchtungslicht unterschiedlich beeinflusst. Die Phasenplatte kann durch ein bewegliches optisch-brechendes Medium ausgeführt sein. Beispielsweise kann ein Keil vorhanden sein, der zur Phasenschiebung verschoben wird. Alternativ kann eine planparallele Platte vorhanden sein, die zur Phasenschiebung verkippt wird. Zudem kann eine Platte mit einem Flüssigkristallbereich eingesetzt werden, welcher zur Phasenschiebung schaltbar ist.

Prinzipiell reicht zur Phasenschiebung eine einzige Phasenplatte, die im Strahlengang hinter den Strahlvereinigungsspiegeln angeordnet ist. Bevorzugt ist aber hinter jeder optischen Baugruppe eine Phasenplatte vorhanden. Hierdurch wird eine Ausführungsform der erfindungsgemäßen Optikanordnung ermöglicht, bei welcher die elektronischen Steuerungsmittel dazu eingerichtet sind, zur Reduzierung einer Messunterbrechungszeit eine oder mehrere der Phasenplatten, die sich im Strahlengang einer bestimmten optischen Baugruppen befindet, umzustellen, während ein Strahlengang zu einer anderen optischen Baugruppe ausgewählt ist.

Typischerweise beträgt die erforderliche Zeit zur Phasenverschiebung mit einer Phasenplatte etwa 12 ms. Durch die vorbeschriebene Steuerung können jedoch Messunterbrechungszeiten deutlich geringer als 12 ms ausfallen und unter Umständen allein durch eine Schaltdauer des Umlenkspiegels bestimmt sein. Diese kann im Bereich weniger Millisekunden, beispielsweise 2 ms, liegen.

Um eine größere Anzahl verschieden orientierter Gitterabbildungen zu erzeugen als Strahlengänge zu verschiedenen optischen Baugruppen vorhanden sind, kann im Strahlengang hinter den Strahlvereinigungsspiegeln ein Bildfeldrotator vorhanden sein. Dieser ändert eine Orientierung der strukturierten Beleuchtung, die mit den optischen Baugruppen bereitgestellt wird. Zudem ist eine Stelleinrichtung zum Drehen des Bildfeldrotators vorgesehen.

Um auch Messungen ohne strukturierte Beleuchtung zu ermöglichen, können die elektronischen Steuerungsmittel dazu eingerichtet sein, zum Bereitstellen einer Weitfeldbeleuchtung Licht auf einen Strahlengang umzulenken, der frei von Gittern ist. Hierbei sind Mittel zum alternativen Leiten von Licht zur Weitfeldbeleuchtung und von Licht, das von den Gittern kommt, auf einen gemeinsamen Strahlengang in Richtung der Probe vorhanden. Diese Mittel können einen teildurchlässigen Spiegel, einen polarisationsabhängigen Spiegel und/oder einen Polarisationswürfel umfassen. Auch ein beweglicher Spiegel, wie zum Beispiel ein Galvanometer-Scanspiegel oder ein MEMS-Spiegel, kann eingesetzt werden. In diesem Fall sind die elektronischen Steuerungsmittel dazu eingerichtet, den beweglichen Spiegel entweder auf eine Position einzustellen, in der Licht vom Strahlengang ohne Gitter zur Probenebene geleitet wird, oder auf eine Position, in der Licht von den Gittern in Richtung der Probenebene geleitet wird.

Bei einer weiteren bevorzugten Variante der erfindungsgemäßen Optikanordnung ist im Strahlengang hinter den Strahlvereinigungsspiegeln eine Zoomoptik vorhanden zum Anpassen einer Ausleuchtung eines Objektivs des Lichtmikroskops. Das Einstellen des Zooms kann automatisch über elektronische Steuerungsmittel in Abhängigkeit eines in den Strahlengang eingebrachten Objektivs erfolgen.

Prinzipiell kann an Stelle einer Zoomoptik auch eine Beleuchtungsanpassung über einen Gitterwechsel durchgeführt werden. Hierzu können Austauschgitter außerhalb einer Ebene, die durch die unterschiedlichen Strahlengänge zu verschiedenen optischen Baugruppen bestimmt ist, angeordnet werden. Diese Austauschgitter können sodann über einen motorisierten Gitterwechsler ein momentan genutztes Gitter ersetzten.

Ein motorisierter Gitterwechsel kann auch vorgesehen sein, um die optischen Baugruppen durch weitere Sätze an Gittern zu ersetzen. Dabei können sich die Gitter verschiedener Sätze durch ihre Gitterkonstanten unterscheiden.

Bei einer bevorzugten Ausgestaltung des erfindungsgemäßen Lichtmikroskops ist jedes der Gitter in einer Ebene angeordnet, die zu der Probenebene optisch konjugiert ist. Dabei ist besonders bevorzugt, dass einer der Strahlvereinigungsspiegel in einer Pupillenebene angeordnet ist, oder dass zwei Strahlvereinigungsspiegel auf verschiedenen Seiten der Pupillenebene angeordnet sind. Bei mehr als zwei Strahlvereinigungsspiegeln werden diese bevorzugt so angeordnet, dass die Pupillenebene an oder neben einem mittleren der Strahlvereinigungsspiegel liegt. Dadurch wird weitestgehend vermieden, dass Licht von verschiedenen Gittern auf denselben Bereich an einem Strahlvereinigungsspiegel trifft. Insbesondere Licht der ersten Beugungsordnung kann für verschiedene Gitter ohne Überlappung auf vollständig voneinander verschiedene Bereiche eines Strahlvereinigungsspiegels geführt werden.

Zweckmäßigerweise kann das erfindungsgemäße Lichtmikroskop einen teildurchlässigen Spiegel aufweisen, der von den Strahlvereinigungsspiegeln kommendes Licht zu einer Probe reflektiert und von der Probe kommendes Probenlicht in Richtung einer Detektoreinrichtung transmittiert. Dieser teildurchlässige Spiegel kann beispielsweise ein Farbteiler sein, der wellenlängenabhängig Licht reflektiert oder transmittiert. Bei dem Probenlicht kann es sich kann um Fluoreszenz- oder Phosphoreszenz-Licht handeln.

Eine Anordnung zwischen den Strahlvereinigungsspiegel und dem teildurchlässigen Spiegel kann zum Reduzieren unerwünschter Polarisationsänderungen genutzt werden. So können bei der Reflexion an den Strahlvereinigungsspiegeln die s- und p-Anteile von polarisiertem Licht unterschiedlich beeinflusst werden, wodurch eine unerwünschte Polarisationsänderung entsteht. Durch Reflexion am teildurchlässigen Spiegel können nun die s- und p-Anteile erneut unterschiedlich beeinflusst werden, wodurch die unerwünschte Änderung der Polarisation zumindest teilweise kompensiert wird. Dies kann erreicht werden, indem zum Beibehalten einer Polarisierung des Lichts die Strahlvereinigungsspiegel und der teildurchlässige Spiegel in Form eines Periskops angeordnet sind. Hierbei kann Licht hinter dem teildurchlässigen Spiegel parallel zu Licht vor den Strahlvereinigungsspiegeln verlaufen. Die Reflexion an den Strahlvereinigungsspiegeln und dem teildurchlässigen Spiegel kann dabei jeweils eine Lichtumlenkung von 90° bewirken.

Für eine mechanisch einfache Ausgestaltung liegen die unterschiedlichen Strahlengänge zu verschiedenen optischen Baugruppen bevorzugt in einer Ebene und parallel zueinander. In diesem Fall wird Licht, das an einem hintersten Strahlvereinigungsspiegel zur Probe transmittiert werden soll, von dem Strahlengang einer hintersten optischen Baugruppe über einen vollständig reflektierenden Spiegel auf den hintersten Strahlvereinigungsspiegel geleitet. Unter dem hintersten Strahlvereinigungsspiegel soll der von der Probenebene am weitesten entfernte Strahlvereinigungsspiegel verstanden werden.

Weitere Merkmale und Vorteile der Erfindung werden im Folgenden in Bezug auf die beigefügten schematischen Figuren beschrieben. Hierin zeigen:
- Fig. 1: eine schematische Darstellung eines Ausführungsbeispiels eines erfindungsgemäßen Lichtmikroskops mit einer erfindungsgemäßen Optikanordnung;
- Fig. 2: eine schematische Darstellung eines ersten Strahlvereinigungsspiegels der Optikanordnung und
- Fig. 3: eine schematische Darstellung eines zweiten Strahlvereinigungsspiegels der Optikanordnung.

Gleiche und gleichwirkende Komponenten sind in den Figuren in der Regel mit denselben Bezugszeichen versehen.

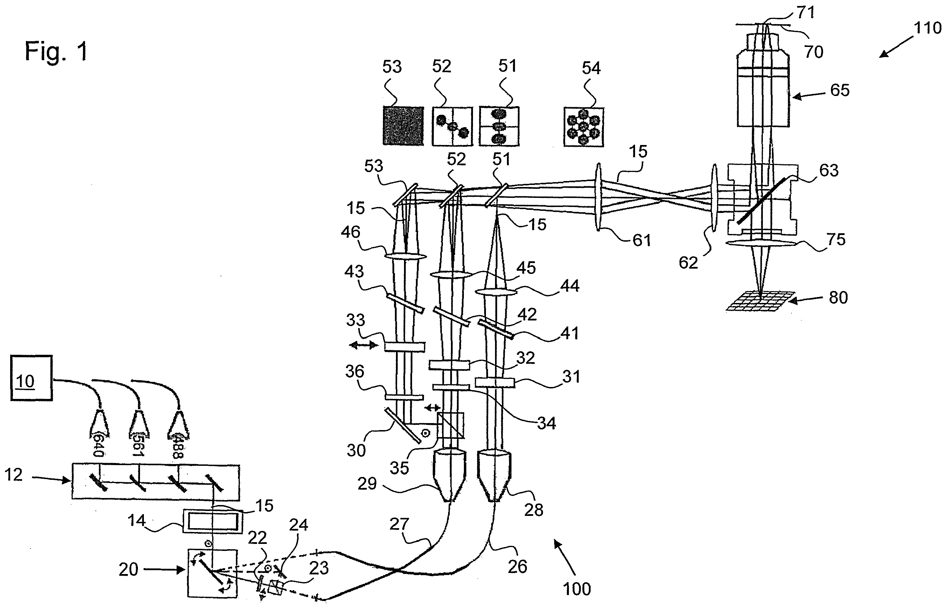

In Fig. 1 ist schematisch ein Ausführungsbeispiel eines erfindungsgemäßen Lichtmikroskops 110 dargestellt. Dieses umfasst als wesentliche Komponenten eine Lichtquelle 10, eine Optikanordnung 100, welche aus dem von der Lichtquelle 10 ausgesandten Licht 15 strukturiertes Beleuchtungslicht erzeugt, ein Objektiv 65 zum Fokussieren des strukturierten Beleuchtungslichts auf eine Probenebene 70 und zum Empfangen von Probenlicht aus der Probenebene 70 sowie eine Detektoreinrichtung 80 zum Nachweis von Probenlicht.

Bei dem dargestellten Beispiel weist die Lichtquelle 10 mehrere Lasermodule auf, die Licht oder Lichtbündel 15 verschiedener Wellenlängen emittieren. Die Wörter Licht, Lichtbündel und Lichtstrahlen können in der vorliegenden Beschreibung als Synonyme verstanden werden. In Fig. 1 ist Licht 15 der Wellenlängen 488 nm, 561 nm sowie 640 nm eingezeichnet.

Über eine Spiegeltreppe 12 werden die Strahlengänge der verschiedenen Lasermodule auf einen gemeinsamen Strahlengang zu einem durchstimmbaren akusto-optischen Filter (AOTF) 14 der Optikanordnung 100 geleitet. Über den AOTF 14 kann Licht einer gewünschten Wellenlänge ausgewählt werden. Zudem kann eine Intensitätsanpassung des Lichts 15 erfolgen, welche später näher beschrieben wird.

Als zentrale Komponente weist die Optikanordnung 100 eine Umlenkeinrichtung 20 auf, zu welcher Licht vom AOTF 14 gelangt. Die Umlenkeinrichtung 20 weist einen Umlenkspiegel 20 auf, der über elektronische Steuerungsmittel in verschiedene Drehpositionen gebracht werden kann. Der Umlenkspiegel 20 kann aufgrund seiner geringen Größe und Masse besonders schnell verstellt werden. Somit kann zwischen verschiedenen Strahlengängen vorteilhafterweise in besonders kurzer Zeit, beispielsweise innerhalb von 2ms, gewechselt werden. Hierzu kann der Umlenkspiegel 20 insbesondere als mikroelektromechanisches System (MEMS) oder als Galvanometer-Scanspiegel ausgeführt sein. Durch ein MEMS sind besonders kurze Umschaltzeiten möglich, wobei ein Galvanometer-Scanspiegel einen größeren Bereich möglicher Umlenkwinkel bereitstellt.

Die Optikanordnung 100 umfasst mehrere optische Baugruppen 31, 32, 33 zum Bereitstellen von strukturiertem Beleuchtungslicht unterschiedlicher Orientierungen. Diese sind in voneinander verschiedenen Strahlengängen angeordnet. Über unterschiedliche Umlenkwinkel der Umlenkeinrichtung 20 ist jeder dieser Strahlengänge auswählbar.

Zur Leitung des Lichts 15 von der Umlenkeinrichtung 20 zu den verschiedenen optischen Baugruppen 31 bis 33 sind im dargestellten Beispiel Lichtleitfasern 26, 27 vorhanden. Weil mit Lichtleitfasern 26, 27 Licht nicht-abbildend geleitet wird, kann der Umlenkspiegel 20 bei Verwendung von Lichtleitfasern 26, 27 kleiner ausgeführt sein. Dadurch werden schnellere Umschaltzeiten des Umlenkspiegels 20 ermöglicht.

Zweckmäßigerweise wird polarisiertes Licht auf die Lichtleitfasern 26, 27 geleitet. Daher sind die Lichtleitfasern 26, 27 polarisationserhaltend.

Prinzipiell kann pro optische Baugruppe 31 bis 33 eine Lichtleitfaser vorhanden sein. Im dargestellten Fall wird jedoch über dieselbe Lichtleitfaser 27 Licht polarisationsabhängig entweder zu der optischen Baugruppe 32 oder zu der optischen Baugruppe 33 geleitet. Vor der Lichtleitfaser 27 ist ein Polarisationswürfel 23 angeordnet, der Licht von zwei verschiedenen Strahlengängen und verschiedener Polarität auf einem gemeinsamen Strahlengang zur Lichtleitfaser 27 führt. Die beiden Strahlengänge, die über den Polarisationswürfel 23 vereint werden, können mittels unterschiedlicher Umlenkwinkel der Umlenkeinrichtung 20 ausgewählt werden. Auf einem dieser Strahlengänge gelangt Licht von der Umlenkeinrichtung 20 über einen Spiegel 24 auf den Polarisationswürfel 23, ohne dass sich dabei die Polarisationsrichtung des Lichts 15 ändert. Auf dem anderen Strahlengang trifft Licht 15 vor Erreichen des Polarisationsstrahlteilers 23 auf polarisationsändernde Mittel 22. Diese können beispielsweise eine λ/2-Platte aufweisen, welche die Polarisationsrichtung des Lichts 15 um 90° drehen.

Über verschiedene Umlenkwinkel der Umlenkeinrichtung 20 kann somit eine Polarisationsrichtung von Licht 15, das über die Lichtleitfaser 27 geleitet wird, ausgewählt werden. Hinter der Lichtleitfaser 27 ist ein Polarisationsstrahlteiler 35 angeordnet. Abhängig von der Polarisationsrichtung wird das Licht 15 transmittiert oder reflektiert und so auf einen Strahlengang zur optischen Baugruppe 32 oder auf einen Strahlengang zur optischen Baugruppe 33 geleitet.

Die Strahlengänge der verschiedenen optischen Baugruppe 31 bis 33 liegen in einer Ebene und vorzugsweise parallel zueinander. Dies ist für eine verlustarme Zusammenführung der Strahlengänge hinter den optischen Baugruppen 31 bis 33 bedeutsam. Damit die Strahlengänge der optischen Baugruppen 31 bis 33 parallel zueinander verlaufen, kann ein Spiegel 30 vorhanden sein, der vom Polarisationsstrahlteiler 35 reflektiertes Licht zu der optischen Baugruppe 33 umlenkt.

Im dargestellten Fall weist die erste optische Baugruppe 31 ein erstes Gitter 31 auf, die zweite optische Baugruppe 32 weist ein zweites Gitter 32 auf und die dritte optische Baugruppe 33 umfasst ein drittes Gitter 33. Jedes der Gitter 31 bis 33 ist in einer Zwischenbildebene angeordnet. Somit wird eine strukturierte Beleuchtung erzeugt, bei welcher die Gitterstruktur des jeweils ausgewählten Gitters 31 bis 33 scharf in der Probenebene 70 abgebildet wird.

Alternativ kann auch ein einziges Gitter vorgesehen sein, welches vor der Umlenkeinrichtung 20 angeordnet ist. In diesem Fall umfassen die optischen Baugruppen 31 bis 33 Bildfeldrotatoren, durch die das Gitter in verschiedenen Orientierungen auf der Probenebene 70 abgebildet wird. In diesem Fall erfolgt eine Weiterleitung ab der Umlenkeinrichtung 20 ohne Lichtleitfasern.

Damit die Abbildungen der Gitter 31 bis 33 an der Probenebene 70 einen hohen Modulationskontrast aufweisen, wird die Polarisationsrichtung von Licht 15 bevorzugt senkrecht zum Gittervektor, das heißt parallel zur Richtung der Gitterstäbe, des jeweiligen Gitters 31 bis 33 eingestellt.

Um die Polarisationsrichtung des Lichts 15 abhängig von einem zu beleuchtenden Gitter 31 bis 33 einzustellen, können λ/2-Platten 34, 36 vor den Gittern vorgesehen sein. Alternativ oder zusätzlich können die Polarisationsrichtungen auch über die axialen Rotationsausrichtungen der Lichtleitfasern 26, 27 und/oder der daran angeschlossenen Kollimatoren 28, 29, aus welchen Licht 15 die jeweilige Lichtleitfaser 26, 27 verlässt, vorgegeben werden. Der Kollimator 28 ist folglich um die Ausbreitungsrichtung des austretenden Lichts 15 so gedreht, dass die Polarisationsrichtung des austretenden Lichts 15 parallel zu den Gitterstäben des ersten Gitters 31 steht.

In gleicher Weise ist der Kollimator 29 so ausgerichtet, dass die Polarisationsrichtung von austretendem Licht 15 parallel zu den Gitterstäben des zweiten Gitters 32 steht. Schließlich soll auch die Polarisationsrichtung von Licht 15, das am Polarisationsstrahlteiler 35 reflektiert wird, parallel zu der Richtung der Gitterstäbe des Gitters 33 stehen. Hierzu ist zwischen dem Polarisationsstrahlteiler 35 und dem Gitter 33 eine λ/2-Platte angeordnet.

Bevorzugt umfassen die Kollimatoren 28, 29 jeweils eine Zoomoptik. Dadurch können auch bei verschiedenen Entfernungen zu den zugehörigen optischen Baugruppen 31 bis 33 gleichartige Lichtleitfasern 26, 27 und Kollimatoren 28, 29 eingesetzt werden.

Zum Zusammenführen der Strahlengänge von verschiedenen Gittern 31 bis 33 weist die Optikanordnung 100 mehrere Strahlvereinigungsspiegel 51, 52 auf. Von dem ersten Gitter 31 gebeugtes Licht 15 gelangt über eine erste Fokussieroptik 44 auf den ersten Strahlvereinigungsspiegel 51. In analoger Weise gelangt an dem zweiten Gitter 32 gebeugtes Licht 15 über eine zweite Fokussieroptik 45 zu dem zweiten Strahlvereinigungsspiegel 52. An dem dritten Gitter 33 gebeugtes Licht 15 wird an einem Spiegel 53 vollständig reflektiert und gelangt so auf den zweiten Strahlvereinigungsspiegel 52.

Die Strahlvereinigungsspiegel 51 und 52 weisen jeweils reflektierende Bereiche und lichtdurchlässige Bereiche auf, welche so angeordnet sind, dass von den Strahlengängen der verschiedenen Gitter 31 bis 33 ein möglichst großer Anteil des Lichts 15 zur Probe weitergeleitet wird.

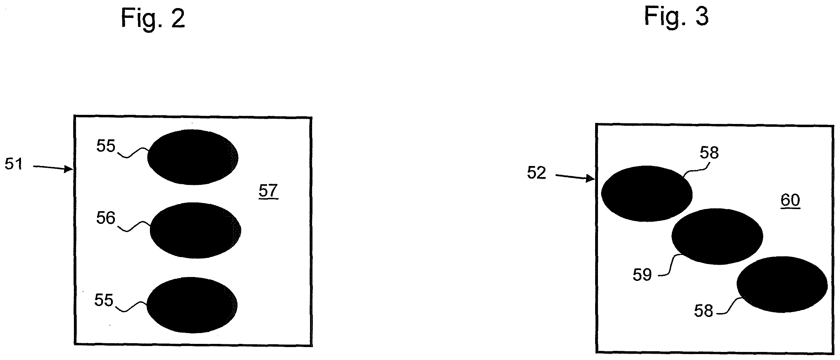

Ein Querschnitt des zweiten Strahlvereinigungsspiegels 52 ist schematisch in Fig. 3 dargestellt. Der Strahlvereinigungsspiegel 52 kann beispielsweise durch ein lichtdurchlässiges Substrat gebildet sein, auf dem an bestimmten Stellen ein reflektierendes Metall zum Bilden von reflektierenden Bereichen 58 aufgebracht sind. Die reflektive und transmittive Eigenschaft kann insbesondere für Licht des sichtbaren, des infraroten und/oder des ultravioletten Spektralbereichs gelten. Die reflektierenden Bereiche 58 sind an Stellen angeordnet, auf welchen Licht 15 gelangt, das am zweiten Gitter 32 in eine erste Beugungsordnung gebeugt wird. Durch Verwendung von Liniengittern mit fester Periode wird Licht unter anderem in eine negative erste Beugungsordnung und eine positive erste Beugungsordnung gebeugt, wodurch Licht in zwei räumlich verschiedene Bereiche gebeugt wird. Die Orientierung dieser beiden Bereiche bezüglich der optischen Achse hängt von der Ausrichtung des Gitters ab. Daher ist eine Ausrichtung der beiden reflektierenden Bereiche 58 bezüglich eines zentralen Bereichs 59 abhängig von der Ausrichtung des zweiten Gitters 32 gewählt.

Die Orientierung des dritten Gitters 33 weicht von der des zweiten Gitters 32 ab. Dadurch trifft Licht 15 der ersten Beugungsordnung von dem dritten Gitter 33 auf andere Stellen als die reflektierenden Bereiche 58 am zweiten Strahlvereinigungsspiegel 52. Diese Stellen sind durch einen lichtdurchlässigen Bereich 60 gebildet. Dadurch kann Licht der ersten Beugungsordnung von sowohl dem zweiten Gitter 32 als auch von dem dritten Gitter 33 weitestgehend vollständig, beispielsweise zu über 90%, von dem zweiten Strahlvereinigungsspiegel 52 in Richtung der Probenebene 70 weitergeleitet werden.

Licht 15 der nullten Beugungsordnung breitet sich sowohl für das zweite Gitter 32 als auch für das dritte Gitter 33 entlang der optischen Achse aus und trifft daher in einem zentralen Bereich 59 auf den zweiten Strahlvereinigungsspiegel 52. Um Licht 15 der nullten Beugungsordnung von beiden Gittern 32, 33 teilweise in Richtung der Probenebene 70 weiterzuleiten, ist der zentrale Bereich 59 teilweise reflektierend. Beispielsweise kann er prozentual gleiche Anteile an Licht 15 reflektieren wie transmittieren.

Die reflektierenden Bereiche 58 und der zentrale Bereich 59 können rundlich, beispielsweise elliptisch, sein. Hierdurch wird berücksichtigt, dass ein kreisförmiger Strahlquerschnitt auf den Strahlvereinigungsspiegeln, die schräg zu Auftreffrichtung des Lichts stehen, eine elliptische Fläche beleuchtet. Bevorzugt sind die Bereiche 58, 59 in einer Horizontalrichtung, welche innerhalb einer durch die Strahlengänge der verschiedenen Gitter 31 bis 33 definierten Ebene liegt, größer als in einer Vertikalrichtung senkrecht hierzu. Bevorzugt sind die Abmessungen der Bereiche 58, 59 in der Horizontalrichtung um 20% bis 60% größer als in der Vertikalrichtung.

Das vom zweiten Strahlvereinigungsspiegel 52 in Richtung der Probenebene 70 weitergeleitete Licht 15 trifft auf den ersten Strahlvereinigungsspiegel 51. Dieser ist schematisch in Fig. 1 dargestellt. Der erste Strahlvereinigungsspiegel 51 weist ebenfalls mindestens einen transmittierenden Bereich 57, zwei reflektierende Bereiche 55 und einen teildurchlässigen zentralen Bereich 56 auf. Diese Bereiche können wie die entsprechenden Bereiche gleicher Bezeichnung des zweiten Strahlvereinigungsspiegels 52 ausgeführt sein. Hierbei sind jedoch die beiden reflektierenden Bereiche 55 in einem anderen Drehwinkel bezüglich des zentralen Bereichs 56 angeordnet als die beiden reflektierenden Bereiche 58. Eine Rotationsausrichtung der beiden reflektierenden Bereiche 55 innerhalb einer Oberfläche des Strahlvereinigungsspiegels 51 ist abhängig von der Gitterorientierung des ersten Gitters 31 gewählt. Dadurch trifft Licht 15, das vom ersten Gitter 31 in die erste Beugungsordnung gebeugt wird, auf die beiden reflektierenden Bereiche 55 und wird so in Richtung der Probenebene 70 weitergeleitet.

Bei Erreichen des ersten Strahlvereinigungsspiegels 51 ist die Lichtintensität der nullten Beugungsordnung des zweiten und dritten Gitters 32 und 33 bereits aufgrund des zentralen Bereichs 59 des zweiten Strahlvereinigungsspiegels 52 reduziert. Gleichwohl soll Licht der nullten Beugungsordnung von verschiedenen Gittern 31 bis 33 mit ähnlicher Intensität zur Probe weitergeleitet werden. Daher ist eine Lichtdurchlässigkeit des zentralen Bereichs 56 des ersten Strahlvereinigungsspiegels 51 größer als 50% gewählt. Beispielsweise kann der zentrale Bereich 56 prozentual einen doppelt so großen Lichtanteil transmittieren wie reflektieren. Dadurch kann Licht 15 der nullten Beugungsordnung von allen drei Gittern 31 bis 33 mit gleicher Intensität durch die beiden Strahlvereinigungsspiegel 51, 52 in Richtung der Probenebene 70 weitergeleitet werden.

Das von verschiedenen Gittern gebeugte Licht hat in der Pupillenebene besonders wenig überlappende Bereiche. Daher werden die Strahlvereinigungsspiegel 51, 52 bevorzugt nahe der Pupillenebene angeordnet.

Ein vereinigter Strahlquerschnitt im Bereich der Pupillenebene ist in Fig. 1 schematisch im Bildausschnitt 54 dargestellt. Hierbei ist Licht der nullten Beugungsordnung aller Gitter 31 bis 33 in einem zentralen Bereich erkennbar. Entlang einem Kreisumfang um diesen zentralen Bereich sind sechs beleuchtete Bereiche erkennbar, von denen jeweils zwei von der ersten Beugungsordnung eines der drei Gitter 31 bis 33 stammen. Bei dieser Darstellung ist zu berücksichtigen, dass Licht 15 nicht gleichzeitig, sondern nacheinander zu den einzelnen Gittern 31 bis 33 geleitet wird. Zu jedem Zeitpunkt sind folglich allein der zentrale Bereich sowie zwei Bereiche, die zur ersten Beugungsordnung gehören, von dem Bildausschnitt 54 beleuchtet.

Über Optiken 61 und 62 kann das Licht 15 weiter zu einem Strahlteiler 63 geleitet werden. Der Strahlteiler 63 ist bevorzugt ein Farbteiler 63, der für das Licht 15 der Lichtquelle 10 reflektierend ist. Es kann auch ein Optikwechsler vorhanden sein, mit dem abhängig von einer genutzten Wellenlänge der Lichtquelle 10 aus mehreren Farbteilern einer in den Strahlengang eingebracht wird. Durch den Farbteiler 63 wird das Licht 15 zu dem Objektiv 65 geleitet, welches das Licht 15 auf die Probenebene 70 fokussiert. Dort kann eine Probe 71 angeordnet sein, welche zur Lumineszenz angeregt werden kann. Von der Probe ausgestrahltes Probenlicht wird von dem Objektiv 65 wiederum zu dem Farbteiler 63 geleitet, dessen Grenzwellenlänge zwischen Transmission und Reflexion so gewählt ist, dass Probenlicht transmittiert wird. Sodann wird das Probenlicht mit einer Fokussieroptik 75 auf eine räumlich auflösende Detektoreinrichtung 80 fokussiert.

Es kann wünschenswert sein, dass eine Polarisationsrichtung von Licht 15 an den Gittern 31 bis 33 bis zur Probenebene 70 beibehalten wird. In diesem Zusammenhang ist problematisch, dass s- und p-Anteile von polarisiertem Licht beim Auftreffen auf optische Elemente im Allgemeinen verschieden beeinflusst werden. Als Folge wird die Polarisation des Lichts geändert. Um diesen Effekt zu minimieren, sind der Strahlteiler 63 und die Strahlvereinigungsspiegel 51, 52 und der Spiegel 53 in Form eines Periskops angeordnet. Allgemein kann an Stelle des Strahlteilers 63 auch ein anderer Spiegel im Strahlengang hinter den Komponenten 51, 52, 53 angeordnet sein, um zusammen mit diesen ein Periskop zu bilden.

Bei dem Periskop erfolgt an dem Strahlteiler 63 durch die Reflexion des Lichts 15 eine Umlenkung des Lichts 15 in eine entgegengesetzte Richtung zu einer Umlenkrichtung an den Strahlvereinigungsspiegeln 51, 52 und dem Spiegel 53. In dem dargestellten Beispiel von Fig. 1 wird Licht von den Gittern 31 bis 33 an den Strahlvereinigungsspiegeln 51, 52 und dem Spiegel 53 nach rechts in Richtung der Probe weitergeleitet und am Strahlteiler 63 nach links weitergeleitet. Dadurch wird einer unerwünschten Polarisationsbeeinflussung an den Komponenten 51, 52, 53 durch eine entgegengesetzte Polarisationsänderung an dem Strahlteiler 63 entgegengewirkt.

Durch Auswahl von einem der drei Strahlengänge zu den verschiedenen Gittern 31 bis 33 kann zwischen verschiedenen Gitterorientierungen gewählt werden. Für die Berechnung eines hochauflösenden Bilds auf Grundlage strukturierter Beleuchtung ist zusätzlich eine Phasenverschiebung erforderlich. Hierzu können Stelleinrichtungen vorhanden sein, die die Gitter 31 bis 33 unabhängig voneinander verschieben und/oder verdrehen können. Alternativ können hinter den Gittern 31 bis 33 jeweils optisch-brechende Medien 41 bis 43 angeordnet sein, welche auch als Wackelplatte bezeichnet werden können. Die Wackelplatten 41 bis 43 können über Stelleinrichtungen bewegbar sein und beispielsweise einen verschiebbaren lichtdurchlässigen Keil oder eine neigbare lichtdurchlässige Platte aufweisen. Alternativ kann jede Wackelplatte 41 bis 43 auch durch einen Flüssigkristallbereich gebildet sein, dessen Flüssigkristalle zwischen zwei oder mehr Einstellungen schaltbar sind. In jedem Fall wird eine Phasenschiebung der strukturierten Beleuchtung erreicht, das heißt eine Abbildung der Gitterlinien wird in einer Richtung quer zum Verlauf der Gitterlinien verschoben. Bevorzugt werden zu jeder Gitterorientierung mindestens drei oder mindestens fünf Bilder der Probe 71 mit verschiedener Phasenschiebung aufgenommen und anschließend miteinander verrechnet.

Die Stelleinrichtungen benötigen zum Verstellen der Gitter 31 bis 33 und/oder der Wackelplatten 41 bis 43 eine Phasenschiebezeit. Diese ist in der Regel größer als eine Schaltzeit des Umlenkspiegels 20 zum Umschalten zwischen den verschiedenen Strahlengängen der Gitter 31 bis 33. Eine Messunterbrechungszeit zwischen zwei Aufnahmen von Probenbildern kann prinzipiell durch die Umschaltdauer des Umlenkspiegels 20 und/oder durch die Phasenschiebezeit bedingt sein.

Bevorzugt erfolgt ein Phasenschieben in einem Strahlengang, während ein anderer Strahlengang zu einem anderen Gitter beleuchtet wird. Es werden also nicht direkt aufeinander zwei Probenbilder über denselben Strahlengang mit verschiedener Phasenverschiebung aufgenommen. In diesem Fall wäre eine Messunterbrechungszeit durch die Phasenschiebezeit bestimmt. Vielmehr werden zwei direkt aufeinander folgende Probenbilder stets über unterschiedliche Strahlengänge aufgenommen. Dadurch kann eine Messunterbrechungszeit erreicht werden, die kürzer als die Phasenschiebezeit ist und insbesondere der Schaltdauer des Umlenkspiegels 20 entsprechen kann.

Unabhängig von der Orientierung und Phase der strukturierten Beleuchtung sollten alle Probenbilder mit gleicher Lichtintensität aufgenommen werden. Je nach ausgewählter optischer Baugruppe 31 bis 33 wird Licht 15 jedoch über verschiedene Lichtleitfasern 26, 27 geleitet, die im Allgemeinen unterschiedliche Lichtverluste bewirken, beispielsweise aufgrund verschiedener Einkopplungsverluste.

Um dennoch an den Lichtleitfasern 26, 27 gleiche Austrittsintensitäten zu erreichen, kann mit dem AOTF 14 eine Intensitätsanpassung erfolgen. Hierzu steuern elektronische Steuerungsmittel den AOTF 14 abhängig von einer Einstellung am Umlenkspiegel 20 an. Dadurch schwächt der AOTF 14 Licht stärker, wenn es zu einer Lichtleitfaser mit geringeren Lichtverlusten geleitet wird.

Die in Fig. 1 dargestellte Ausführungsform kann um eine beliebige Anzahl weiterer optischer Baugruppen mit eigenem Strahlengang erweitert sein. Diese weiteren optischen Baugruppen erzeugen wiederum Gitterabbildungen in anderen Orientierungen. Dabei wird auch Licht dieser Strahlengänge über zusätzliche Strahlvereinigungsspiegel auf den gemeinsamen Strahlengang vereint. Um zu vermeiden, dass Licht 15 von einem der Strahlengänge sämtliche Strahlvereinigungsspiegel durchlaufen muss, können die Strahlvereinigungsspiegel statt in einer Reihe angeordnet zu sein auf mehrere Reihen verteilt sein. Die Strahlengänge der mehreren Reihen werden anschließend über einen Strahlvereinigungsspiegel vereint.

Durch das erfindungsgemäße Lichtmikroskop 110 und die erfindungsgemäße Optikanordnung 100 kann vorteilhafterweise zwischen Abbildungen verschiedener Gitterorientierung in besonders kurzer Zeit gewechselt werden. Dabei sind Lichtverluste gering und der apparative Aufwand kann verhältnismäßig niedrig gehalten werden.

### Bezugszeichenliste

- 10: Lichtquelle
- 12: Spiegeltreppe mit teildurchlässigen Spiegeln
- 14: Akusto-optischer durchstimmbarer Filter (AOTF)
- 15: Licht
- 20: Umlenkeinrichtung, Umlenkspiegel
- 22: Polarisationsändernde Mittel, λ/2-Platte
- 23: Polarisationswürfel
- 24: Spiegel
- 26, 27: Lichtleitfasern
- 28, 29: Auskoppeloptiken der Lichtleitfasern, Kollimatoren
- 30: Spiegel
- 31: Erste optische Baugruppe, erstes Gitter
- 32: Zweite optische Baugruppe, zweites Gitter
- 33: Dritte optische Baugruppe, drittes Gitter
- 34, 36: Polarisationsändernde Mittel, λ/2-Platte
- 35: Polarisationsstrahlteiler
- 41, 42, 43: Phasenplatten
- 44, 45, 46: Fokussieroptiken
- 51, 52: Erster und zweiter Strahlvereinigungsspiegel
- 53: Spiegel
- 54: Lichtintensitätsverteilung hinter den Strahlvereinigungsspiegeln
- 55: Reflektierende Bereiche des ersten Strahlvereinigungsspiegels
- 56: Teildurchlässiger zentraler Bereich des ersten Strahlvereinigungsspiegels
- 57: Lichtdurchlässiger Bereich des ersten Strahlvereinigungsspiegels
- 58: Reflektierende Bereiche des zweiten Strahlvereinigungsspiegels
- 59: Teildurchlässiger zentraler Bereich des zweiten Strahlvereinigungsspiegels
- 60: Lichtdurchlässiger Bereich des zweiten Strahlvereinigungsspiegels
- 61, 62: Optiken
- 63: Strahlteiler, Farbteiler
- 65: Objektiv
- 70: Probenebene
- 71: Probe
- 75: Fokussieroptik
- 80: Detektoreinrichtung
- 100: Optikanordnung
- 110: Lichtmikroskop

## Patentansprüche

1. Optikanordnung zum Positionieren in einem Strahlengang eines Lichtmikroskops
mit mindestens einer ersten und einer zweiten optischen Baugruppe (31, 32) zum Bereitstellen von strukturiertem Beleuchtungslicht (15) aus auftreffendem Licht (15),
**dadurch gekennzeichnet,**
**dass** das auftreffende Licht (15) über unterschiedliche Strahlengänge zu den verschiedenen optischen Baugruppen (31, 32, 33) und weiter in Richtung einer Probe (71) leitbar ist, wobei zum Auswählen eines zu beleuchtenden Strahlengangs zu einer bestimmten optischen Baugruppe (31, 32, 33) eine verstellbare Umlenkeinrichtung (20) vorhanden ist, mit der das Licht (15) auswählbar auf eine der optischen Baugruppen (31, 32, 33) umlenkbar ist,
**dass** zum Bereitstellen von strukturiertem Beleuchtungslicht (15):
- die optischen Baugruppen (31, 32, 33) jeweils ein Gitter (31, 32, 33) aufweisen
oder
- ein Gitter zum Erzeugen von strukturiertem Beleuchtungslicht (15) in einem gemeinsamen Strahlengang vor den unterschiedlichen Strahlengängen zu den verschiedenen optischen Baugruppen (31, 32, 33) angeordnet ist und die optischen Baugruppen (31, 32, 33) jeweils einen Bildfeldrotator aufweisen, wobei mit den Bildfeldrotatoren strukturiertes Beleuchtungslicht (15) in unterschiedlichen Orientierungen bereitgestellt wird,
**dass** elektronische Steuerungsmittel vorhanden und dazu eingerichtet sind, von den unterschiedlichen Strahlengängen zu verschiedenen optischen Baugruppen (31, 32, 33) jeweils einen Strahlengang zu einer Zeit zu beleuchten,
**dass** mindestens ein erster Strahlvereinigungsspiegel (51) vorhanden ist zum Leiten von Licht (15), das von verschiedenen optischen Baugruppen (31, 32, 33) kommt, auf einen gemeinsamen Strahlengang in Richtung einer Probe (71), dass der erste Strahlvereinigungsspiegel (51) reflektierende Bereiche (55) aufweist, auf die nur Licht (15) von einer der beiden optischen Baugruppen (31, 32) trifft, und
**dass** der erste Strahlvereinigungsspiegel lichtdurchlässige Bereiche (57) aufweist, auf die nur Licht (15) von der anderen der optischen Baugruppen (32, 31) trifft.

2. Optikanordnung nach Anspruch 1,
**dadurch gekennzeichnet,**
**dass** mindestens eine dritte optische Baugruppe (33) zum Erzeugen von strukturiertem Beleuchtungslicht (15) aus auftreffendem Licht (15) vorhanden ist, wobei die dritte optische Baugruppe (33) ein Gitter (33) umfasst, wenn die erste und zweite optische Baugruppe (31, 32) jeweils ein Gitter (31, 32) aufweisen, und wobei die dritte optische Baugruppe (33) einen Bildfeldrotator umfasst, wenn die ersten und zweite Baugruppe (31, 32) jeweils einen Bildfeldrotator aufweisen,
**dass** ein zweiter Strahlvereinigungsspiegel (52) vorhanden ist zum Leiten von Licht (15), das von der zweiten und dritten optischen Baugruppe (32, 33) kommt, auf einen gemeinsamen Strahlengang zum ersten Strahlvereinigungsspiegel (51),
**dass** der zweite Strahlvereinigungsspiegel (52) reflektierende Bereiche (58) aufweist, auf die nur Licht (15) von der zweiten optischen Baugruppe (32) trifft, und lichtdurchlässige Bereiche (60), auf die nur Licht (15) von der dritten optischen Baugruppe (33) trifft, oder umgekehrt.

3. Optikanordnung nach Anspruch 1 oder 2,
**dadurch gekennzeichnet,**
**dass** einer der Strahlvereinigungsspiegel (51, 52) in einer Ebene angeordnet ist, in der eine Lichtverteilung als Fourier-Transformierte der Lichtverteilung an den Gittern (31, 32, 33) bestimmt ist, oder
**dass** zwei Strahlvereinigungsspiegel (51, 52) auf verschiedenen Seiten der Ebene angeordnet sind, in welcher eine Lichtverteilung als Fourier-Transformierte der Lichtverteilung an den Gittern (31, 32, 33) bestimmt ist.

4. Optikanordnung nach einem der Ansprüche 1 bis 3,
**dadurch gekennzeichnet,**
**dass** der erste Strahlvereinigungsspiegel (51) so angeordnet ist,
- **dass** Licht (15), welches an dem Gitter der ersten optischen Baugruppe (31) oder, wenn die erste optische Baugruppe (31) einen Bildfeldrotator umfasst, an dem davor befindlichen Gitter in eine nullte Beugungsordnung gebeugt und über den Strahlengang der ersten optischen Baugruppe (31) geleitet wird, auf einen zentralen Bereich (56) des ersten Strahlvereinigungsspiegels (51) trifft und
- **dass** Licht (15), welches an dem Gitter der zweiten optischen Baugruppe (32) oder, wenn die zweite optische Baugruppe (32) einen Bildfeldrotator umfasst, an dem davor befindlichen Gitter in eine nullte Beugungsordnung gebeugt und über den Strahlengang der zweiten optischen Baugruppe (32) geleitet wird, auf den zentralen Bereich (56) trifft und
**dass** der zentrale Bereich (56) teildurchlässig ist.

5. Optikanordnung nach einem der Ansprüche 2 bis 4,
**dadurch gekennzeichnet,**
**dass** der zweite Strahlvereinigungsspiegel (52) so angeordnet ist,
- **dass** Licht (15), welches an dem Gitter der zweiten optischen Baugruppe (32) oder, wenn die zweite optische Baugruppe (32) einen Bildfeldrotator umfasst, an dem davor befindlichen Gitter in eine nullte Beugungsordnung gebeugt und über den Strahlengang der zweiten optischen Baugruppe (32) geleitet wird, auf einen zentralen Bereich (59) des zweiten Strahlvereinigungsspiegels (52) trifft und
- **dass** Licht (15), welches an dem Gitter der dritten optischen Baugruppe (33) oder, wenn die dritte optische Baugruppe (33) einen Bildfeldrotator umfasst, an dem davor befindlichen Gitter in eine nullte Beugungsordnung gebeugt und über den Strahlengang der dritten optischen Baugruppe (33) geleitet wird, auf den zentralen Bereich (59) des zweiten Strahlvereinigungsspiegels (52) trifft und
**dass** der zentrale Bereich (59) des zweiten Strahlvereinigungsspiegels (52) teildurchlässig ist und
**dass** der zentrale Bereich (56) des ersten Strahlvereinigungsspiegels (51) eine höhere Lichtdurchlässigkeit als der zentrale Bereich (59) des zweiten Strahlvereinigungsspiegels (52) aufweist.

6. Optikanordnung nach einem der Ansprüche 2 bis 5,
**dadurch gekennzeichnet,**
**dass** die reflektierenden und die lichtdurchlässigen Bereiche (55, 57, 58, 60) der Strahlvereinigungsspiegel (51, 52) so angeordnet sind und die Lichtdurchlässigkeiten der zentralen Bereiche (56, 59) der Strahlvereinigungsspiegel (51, 52) so gewählt sind, dass an den Strahlvereinigungsspiegeln (51, 52) die prozentualen Lichtverluste bezogen auf die Eingangsintensität gleich sind für Lichtbündel (15), die von verschiedenen optischen Baugruppen (31, 32, 33) kommen.

7. Optikanordnung nach einem der Ansprüche 1 bis 6,
**dadurch gekennzeichnet,**
**dass** zum Erzeugen von Gitterabbildungen verschiedener Orientierungen an der Probenebene (70) die optischen Baugruppen (31, 32, 33) Bildfeldrotatoren und/oder Gitter (31, 32, 33) in verschiedenen Orientierungen zueinander aufweisen,
wobei durch das Abbilden verschiedener Gitterorientierungen Licht (15), das vom ersten Gitter (31) in einer ersten Beugungsordnung gebeugt wird, und Licht (15), das vom zweiten Gitter (32) in einer ersten Beugungsordnung gebeugt wird, am ersten Strahlvereinigungsspiegel (51) auf unterschiedliche Bereiche (55, 57) treffen, und
**dass** diese unterschiedlichen Bereiche (55, 57) durch die reflektierenden Bereiche (55) und die lichtdurchlässigen Bereiche (57) gebildet sind, so dass Licht (15) der ersten Beugungsordnung von sowohl dem ersten Gitter (31) als auch dem zweiten Gitter (32) in Richtung der Probenebene (70) weitergeleitet wird.

8. Optikanordnung nach einem der Ansprüche 1 bis 7,
**dadurch gekennzeichnet,**
**dass** zum Leiten von Licht (15) von der Umlenkeinrichtung (20) zu den optischen Baugruppen (31, 32, 33) Lichtwellenleiter (26, 27) vorhanden sind.

9. Optikanordnung nach Anspruch 8,
**dadurch gekennzeichnet,**
**dass** die Lichtwellenleiter (26, 27) polarisationserhaltend sind,
**dass** jeder Lichtwellenleiter (26, 27) in einer axialen Rotationsausrichtung angeordnet ist, bei welcher eine Polarisationsrichtung von austretendem Licht (15) parallel zu einer Richtung der Gitterstäbe eines Gitters (31, 32, 33) ist, auf welches das Licht (15), das aus dem jeweiligen Lichtwellenleiter (26, 27) austritt, gelangt.

10. Optikanordnung nach Anspruch 8 oder 9,
**dadurch gekennzeichnet,**
**dass** eine akusto-optische Vorrichtung (14) vor den Lichtwellenleitern (26, 27) vorhanden ist und
**dass** die elektronischen Steuerungsmittel dazu eingerichtet sind, mit der akusto-optischen Vorrichtung (14) eine Intensität von Licht (15) abhängig davon zu variieren, zu welchem Lichtwellenleiter (26, 27) das Licht (15) weitergeleitet wird, so dass mit allen Lichtwellenleitern (26, 27) eine gleiche Lichtintensität ausgegeben wird oder hinter den Strahlvereinigungsspiegeln (51, 52) Lichtbündel (15), die von verschiedenen optischen Baugruppen (31, 32, 33) kommen, die gleiche Lichtintensität aufweisen.

11. Optikanordnung nach einem der Ansprüche 1 bis 10,
**dadurch gekennzeichnet,**
**dass** zum Ändern einer strukturierten Beleuchtung, die mit einer der optischen Baugruppen (31, 32, 33) bereitgestellt wird, Stelleinrichtungen zum Bewegen der optischen Baugruppen (31, 32, 33) unabhängig voneinander vorhanden sind,
**dass** die elektronischen Steuerungsmittel dazu eingerichtet sind, zur Reduzierung einer Messunterbrechungszeit eine oder mehrere der optischen Baugruppen (31) zu bewegen, während ein Strahlengang zu einer anderen der optischen Baugruppen (32, 33) ausgewählt ist.

12. Optikanordnung nach einem der Ansprüche 1 bis 11,
**dadurch gekennzeichnet, dass** zur Phasenschiebung einer strukturierten Beleuchtung, die mit einer der optischen Baugruppen (31, 32, 33) bereitgestellt wird, mindestens eine Phasenplatte (41, 42, 43) vorhanden ist, die in verschiedene Einstellungen gebracht werden kann, in welchen sie eine Phase von strukturiertem Beleuchtungslicht (15) unterschiedlich beeinflusst.

13. Optikanordnung nach Anspruch 12,
**dadurch gekennzeichnet,**
**dass** die elektronischen Steuerungsmittel dazu eingerichtet sind, zur Reduzierung einer Messunterbrechungszeit eine der Phasenplatten (41), die sich im Strahlengang einer der optischen Baugruppen (31) befindet, umzustellen, während ein Strahlengang zu einer anderen optischen Baugruppe (32, 33) ausgewählt ist.

14. Optikanordnung nach einem der Ansprüche 1 bis 13,
**dadurch gekennzeichnet,**
**dass** die elektronischen Steuerungsmittel dazu eingerichtet sind, zum Bereitstellen einer Weitfeldbeleuchtung Licht (15) auf einen Strahlengang umzulenken, der frei von Gittern (31, 32, 33) ist, und
**dass** Mittel zum alternativen Leiten von Licht (15) zur Weitfeldbeleuchtung und von Licht (15), das von den Gittern (31, 32, 33) kommt, auf einen gemeinsamen Strahlengang in Richtung der Probe (71) vorhanden sind.

15. Optikanordnung nach einem der Ansprüche 1 bis 14,
**dadurch gekennzeichnet,**
**dass** im Strahlengang hinter den Strahlvereinigungsspiegeln (51, 52) eine Zoomoptik (61) vorhanden ist zum Anpassen einer Ausleuchtung eines Objektivs (65) des Lichtmikroskops.

16. Lichtmikroskop
mit einer Probenebene (70), in welcher eine zu untersuchende Probe (71) positionierbar ist, und
mit mindestens einer Lichtquelle (10) zum Aussenden von Licht (15) in Richtung der Probenebene (70),
**dadurch gekennzeichnet,**
**dass** zwischen der Lichtquelle (10) und der Probenebene (70) eine Optikanordnung nach einem der Ansprüche 1 bis 15 vorhanden ist.

17. Lichtmikroskop nach Anspruch 16,
**dadurch gekennzeichnet,**
**dass** einer der Strahlvereinigungsspiegel (51, 52) in einer Pupillenebene angeordnet ist oder
**dass** zwei Strahlvereinigungsspiegel (51, 52) auf verschiedenen Seiten der Pupillenebene angeordnet sind.

18. Lichtmikroskop nach Anspruch 16 oder 17,
**dadurch gekennzeichnet,**
**dass** ein teildurchlässiger Spiegel (63) vorhanden ist, der von den Strahlvereinigungsspiegeln (51, 52) kommendes Licht (15) zu einer Probe (71) reflektiert und von der Probe (71) kommendes Probenlicht in Richtung einer Detektoreinrichtung (80) transmittiert, und
**dass** zum Beibehalten einer Polarisierung des Lichts (15) die Strahlvereinigungsspiegel (51, 52) und der teildurchlässige Spiegel (63) in Form eines Periskops angeordnet sind.

## Claims

1. Optical arrangement for being positioned in a beam path of a light microscope,
having at least one first and one second optical assembly (31, 32) for providing structured illumination light (15) from incident light (15),
**characterized**
**in that** the incident light (15) is guidable via different beam paths to the various optical assemblies (31, 32, 33) and onwards in the direction of a sample (71), wherein an adjustable deflection apparatus (20) is present for selecting a beam path to be illuminated to a certain optical assembly (31, 32, 33), the light (15) being selectably deflectable to one of the optical assemblies (31, 32, 33) by means of said apparatus,
**in that**, for providing structured illumination light (15) :
- the optical assemblies (31, 32, 33) each have a grating (31, 32, 33) or
- a grating for generating structured illumination light (15) is arranged in a common beam path upstream of the different beam paths to the various optical assemblies (31, 32, 33) and the optical assemblies (31, 32, 33) each have an image field rotator, wherein structured illumination light (15) is provided in different orientations by means of the image field rotators,
**in that** electronic control means are present and configured to illuminate exactly one beam path of the different beam paths to various optical assemblies (31, 32, 33) at any one time,
**in that** at least one first beam-combining mirror (51) is present for guiding light (15) coming from various optical assemblies (31, 32, 33) into a common beam path in the direction of a sample (71), in that the first beam-combining mirror (51) has reflecting regions (55), whereon only light (15) from one of the two optical assemblies (31, 32) is incident, and
**in that** the first beam-combining mirror has light-transmissive regions (57), whereon only light (15) from the other one of the optical assemblies (32, 31) is incident.

2. Optical arrangement according to Claim 1,
**characterized**
**in that** at least one third optical assembly (33) for generating structured illumination light (15) from incident light (15) is present, wherein the third optical assembly (33) comprises a grating (33) if the first and second optical assembly (31, 32) each have a grating (31, 32), and wherein the third optical assembly (33) comprises an image field rotator if the first and second assembly (31, 32) each have an image field rotator,
**in that** a second beam-combining mirror (52) is present for guiding light (15) coming from the second and third optical assembly (32, 33) into a common beam path to the first beam-combining mirror (51),
**in that** the second beam-combining mirror (52) has reflecting regions (58), whereon only light (15) from the second optical assembly (32) is incident, and light-transmissive regions (60), whereon only light (15) from the third optical assembly (33) is incident, or vice versa.

3. Optical arrangement according to Claim 1 or 2,
**characterized**
**in that** one of the beam-combining mirrors (51, 52) is arranged in a plane in which a light distribution is determined as a Fourier transform of the light distribution at the gratings (31, 32, 33), or
**in that** two beam-combining mirrors (51, 52) are arranged on different sides of the plane in which a light distribution is determined as a Fourier transform of the light distribution at the gratings (31, 32, 33).

4. Optical arrangement according to any of Claims 1 to 3,
**characterized**
**in that** the first beam-combining mirror (51) is arranged in such a way
- that light (15) which is diffracted into a zero order of diffraction by the grating of the first optical assembly (31) or, if the first optical assembly (31) comprises an image field rotator, by the grating located upstream thereof, and is guided via the beam path of the first optical assembly (31), is incident on a central region (56) of the first beam-combining mirror (51) and
- that light (15) which is diffracted into a zero order of diffraction by the grating of the second optical assembly (32) or, if the second optical assembly (32) comprises an image field rotator, by the grating located upstream thereof, and is guided via the beam path of the second optical assembly (32), is incident on the central region (56) and
**in that** the central region (56) is partially transmissive.

5. Optical arrangement according to any of Claims 2 to 4,
**characterized**
**in that** the second beam-combining mirror (52) is arranged in such a way
- that light (15) which is diffracted into a zero order of diffraction by the grating of the second optical assembly (32) or, if the second optical assembly (32) comprises an image field rotator, by the grating located upstream thereof, and is guided via the beam path of the second optical assembly (32), is incident on a central region (59) of the second beam-combining mirror (52) and
- that light (15) which is diffracted into a zero order of diffraction by the grating of the third optical assembly (33) or, if the third optical assembly (33) comprises an image field rotator, by the grating located upstream thereof, and is guided via the beam path of the third optical assembly (33), is incident on the central region (59) of the second beam-combining mirror (52) and
**in that** the central region (59) of the second beam-combining mirror (52) is partially transmissive and in that the central region (56) of the first beam-combining mirror (51) has a higher light-transmissivity than the central region (59) of the second beam-combining mirror (52).

6. Optical arrangement according to any of Claims 2 to 5,
**characterized**
**in that** the reflecting and the light-transmissive regions (55, 57, 58, 60) of the beam-combining mirrors (51, 52) are arranged in such a way and the transmissivities of the central regions (56, 59) of the beam-combining mirrors (51, 52) are selected in such a way, that the percentage light losses at the beam-combining mirrors (51, 52) with respect to the input intensity are equal for light beams (15) which come from various optical assemblies (31, 32, 33).

7. Optical arrangement according to any of Claims 1 to 6,
**characterized**
**in that** the optical assemblies (31, 32, 33) have image field rotators and/or gratings (31, 32, 33) at different orientations with respect to one another for generating grating images in various orientations at the sample plane (70), wherein, by imaging various grating orientations, light (15) that is diffracted by the first grating (31) in a first diffraction order and light (15) that is diffracted by the second grating (32) in a first diffraction order are incident on different regions (55, 57) of the first beam-combining mirror (51), and
**in that** these different regions (55, 57) are formed by the reflecting regions (55) and the light-transmissive regions (57) so that light (15) of the first diffraction order from both the first grating (31) and the second grating (32) is transmitted in the direction of the sample plane (70).

8. Optical arrangement according to any of Claims 1 to 7,
**characterized**
**in that** optical waveguides (26, 27) are provided for guiding light (15) from the deflection apparatus (20) to the optical assemblies (31, 32, 33).

9. Optical arrangement according to Claim 8,
**characterized**
**in that** the optical waveguides (26, 27) are polarization maintaining,
**in that** each optical waveguide (26, 27) is arranged in an axial rotational alignment, in which a polarization direction of emerging light (15) is parallel to a direction of the grooves of a grating (31, 32, 33), at which the light (15) emerging from the respective optical waveguide (26, 27) arrives.

10. Optical arrangement according to Claim 8 or 9,
**characterized**
**in that** an acousto-optic device (14) is provided upstream of the optical waveguides (26, 27) and
**in that** the electronic control means are configured to vary an intensity of light (15) by means of the acousto-optic device (14) depending on to which optical waveguide (26, 27) the light (15) is transmitted, so that an equal light intensity is output by all optical waveguides (26, 27) or, downstream of the beam-combining mirrors (51, 52), light beams (15) coming from various optical assemblies (31, 32, 33) have the same light intensity.

11. Optical arrangement according to any of Claims 1 to 10,
**characterized**
**in that**, for changing a structured illumination which is provided by one of the optical assemblies (31, 32, 33), actuating apparatuses are present for moving the optical assemblies (31, 32, 33) independently of one another,
**in that** the electronic control means are configured to move one or more of the optical assemblies (31) while a beam path to another optical assembly (32, 33) is selected in order to reduce the duration of measurement interruptions.

12. Optical arrangement according to any of Claims 1 to 11,
**characterized in that** at least one phase plate (41, 42, 43) is present for phase-shifting a structured illumination provided by one of the optical assemblies (31, 32, 33), which phase plate can be brought into various settings, in which said phase plate influences a phase of structured illumination light (15) differently.

13. Optical arrangement according to Claim 12,
**characterized**
**in that** the electronic control means are configured to adjust one of the phase plates (41) located in the beam path of one of the optical assemblies (31) while a beam path to another optical assembly (32, 33) is selected in order to reduce the duration of measurement interruptions.

14. Optical arrangement according to any of Claims 1 to 13,
**characterized**
**in that** the electronic control means are configured to deflect light (15) into a beam path in which there are no gratings (31, 32, 33), for providing a wide field illumination, and
**in that** means are provided for alternative guiding of light (15) for wide field illumination and of light (15) coming from the gratings (31, 32, 33), into a common beam path in the direction of the sample (71).

15. Optical arrangement according to any of Claims 1 to 14,
**characterized**
**in that** a zoom optical unit (61) is present in the beam path downstream of the beam-combining mirrors (51, 52), for adapting an illumination of an objective (65) of the light microscope.

16. Light microscope
having a sample plane (70) in which a sample (71) to be examined is positionable, and
having at least one light source (10) for emitting light (15) in the direction of the sample plane (70),
**characterized**
**in that** an optical arrangement according to any of Claims 1 to 15 is provided between the light source (10) and the sample plane (70).

17. Light microscope according to Claim 16,
**characterized**
**in that** one of the beam-combining mirrors (51, 52) is arranged in a pupil plane or
**in that** two beam-combining mirrors (51, 52) are arranged on different sides of the pupil plane.

18. Light microscope according to Claim 16 or 17,
**characterized**
**in that** a partially transmissive mirror (63) is provided, which reflects light (15) coming from the beam-combining mirrors (51, 52) to a sample (71) and transmits sample light coming from the sample (71) in the direction of a detector apparatus (80), and in that the beam-combining mirrors (51, 52) and the partially transmissive mirror (63) are arranged in the form of a periscope, for maintaining a polarization of the light (15).

## Revendications

1. Dispositif optique à positionner dans le trajet optique d'un microscope optique comportant au moins un premier et un deuxième ensemble optique (31, 32) destinés à produire une lumière d'éclairage structurée (15) à partir d'une lumière incidente (15),
**caractérisé en ce que**
la lumière incidente (15) peut être guidée par l'intermédiaire de divers trajets optiques vers les différents ensembles optiques (31, 32, 33), puis vers un échantillon (71), dans lequel il est prévu, pour sélectionner un trajet de faisceau à éclairer vers un ensemble optique spécifique (31, 32, 33), un dispositif de déviation réglable (20), avec lequel la lumière (15) peut être déviée sélectivement vers l'un des ensembles optiques (31, 32, 33) afin de fournir une lumière d'éclairage structurée (15) :
- les ensembles optiques (31, 32, 33) comportent chacun un réseau (31, 32, 33) ou
- un réseau destiné à générer une lumière d'éclairage structurée (15) est disposé dans un trajet de faisceau commun avant les différents trajets de faisceau vers les différents ensembles optiques (31, 32, 33) et les ensembles optiques (31, 32, 33) comportent chacun un rotateur de champ image, dans lequel une lumière d'éclairage structurée (15) dans différentes orientations est fournie au moyen des rotateurs de champ image,
**en ce qu'**il est prévu des moyens de commande électroniques qui sont conçus pour éclairer à un instant un trajet optique respectif depuis les différents trajets optiques vers différents ensembles optiques (31, 32, 33), **en ce qu'**il est prévu au moins un premier miroir de combinaison de faisceaux (51) pour guider de la lumière (15) issue de différents ensembles optiques (31, 32, 33), vers un trajet optique commun en direction d'un échantillon (71),
**en ce que** le premier miroir de combinaison de faisceaux (51) présente des zones réfléchissantes (55) ne recevant de la lumière (15) que de l'un des deux ensembles optiques (31, 32), et
**en ce que** le premier miroir de combinaison de faisceaux présente des zones transparentes (57) ne recevant de la lumière (15) que des autres ensembles optiques (32, 31).

2. Dispositif optique selon la revendication 1, **caractérisé en ce qu'**il est prévu au moins un troisième ensemble optique (33) destiné à générer une lumière d'éclairage structurée (15) à partir d'une lumière incidente (15), dans lequel le troisième ensemble optique (33) comprend un réseau (33) lorsque les premier et deuxième ensembles optiques (31, 32) comportent chacun un réseau (31, 32) et dans lequel le troisième ensemble optique (33) comprend un rotateur de champ image lorsque les premier et deuxième ensembles (31, 32) comportent chacun un rotateur de champ image,
**en ce qu'**il est prévu un deuxième miroir de combinaison de faisceaux (52) destiné à guider de la lumière (15) issue des deuxième et troisième ensembles optiques (32, 33) sur un trajet optique commun vers le premier miroir de combinaison de faisceaux (51),
**en ce que** le deuxième miroir de combinaison de faisceaux (52) présente des zones réfléchissantes (58) ne recevant de la lumière (15) que du deuxième ensemble optique (32) et des zones transparentes (60) ne recevant de la lumière (15) que du troisième ensemble optique (33), ou inversement.

3. Dispositif optique selon la revendication 1 ou 2, **caractérisé en ce que** l'un des miroirs de combinaison de faisceaux (51, 52) est disposé dans un plan dans lequel une distribution de lumière est déterminée comme étant une transformée de Fourier de la distribution de lumière sur les réseaux (31, 32, 33), ou
**en ce que** deux miroirs de combinaison de faisceaux (51, 52) sont disposés sur des côtés différents du plan dans lequel une distribution de la lumière est déterminée comme étant une transformée de Fourier de la distribution de lumière sur les réseaux (31, 32, 33).

4. Dispositif optique selon l'une des revendications 1 à 3, **caractérisé**
**en ce que** le premier miroir de combinaison de faisceaux (51) est disposé de telle manière
- que la lumière (15) qui est diffractée sur le réseau du premier ensemble optique (31) ou, si le premier ensemble optique (31) comprend un rotateur de champ image, sur le réseau situé avant celui-ci, à l'ordre de diffraction zéro, et qui est guidée sur le trajet optique du premier ensemble optique (31), soit incidente sur une zone centrale (56) du premier miroir de combinaison de faisceaux (51), et
- que la lumière (15) qui est diffractée sur le réseau du deuxième ensemble optique (32) ou, si le deuxième ensemble optique (32) comprend un rotateur de champ image, sur le réseau situé avant celui-ci, à l'ordre de diffraction zéro, et qui est guidée sur le trajet optique du deuxième ensemble optique (32), soit incidente sur la zone centrale (56), et
**en ce que** la zone centrale (56) est partiellement transparente.

5. Dispositif optique selon l'une des revendications 2 à 4, **caractérisé**
**en ce que** le deuxième miroir de combinaison de faisceaux (52) est disposé de telle manière
- que la lumière (15) qui est diffractée sur le réseau du deuxième ensemble optique (32) ou, si le deuxième ensemble optique (32) comprend un rotateur de champ image, sur le réseau situé avant celui-ci, à un ordre de diffraction zéro, et qui est guidée sur le trajet optique du deuxième ensemble optique (32), soit incidente sur une zone centrale (59) du deuxième miroir de combinaison de faisceaux (52), et
- que la lumière (15) qui est diffractée sur le réseau du troisième ensemble optique (33) ou, si le troisième ensemble optique (33) comprend un rotateur de champ image, sur le réseau situé avant celui-ci, à un ordre de diffraction zéro, et qui est guidée sur le trajet optique du troisième ensemble optique (33), soit incidente sur la zone centrale (59) du deuxième miroir de combinaison de faisceaux (52), et
**en ce que** la zone centrale (59) du deuxième miroir de combinaison de faisceaux (52) est partiellement transparente, et
**en ce que** la zone centrale (56) du premier miroir de combinaison de faisceaux (51) présente une transparence plus élevée que la zone centrale (59) du deuxième miroir de combinaison de faisceaux (52).

6. Dispositif optique selon l'une des revendications 2 à 5, **caractérisé**
**en ce que** les zones réfléchissantes et les zones transparentes (55, 57, 58, 60) des miroirs de combinaison de faisceaux (51, 52) sont disposées de telle manière et les transparences des zones centrales (56, 59) des miroirs de combinaison de faisceaux (51, 52) sont choisies de telle manière que, sur les miroirs de combinaison de faisceaux (51, 52), les pertes de lumière en pourcentage par rapport à l'intensité d'entrée soient les mêmes pour des faisceaux lumineux (15) issus de différents ensembles optiques (31, 32, 33).

7. Dispositif optique selon l'une des revendications 1 à 6, **caractérisé**
**en ce que**, pour générer des images de réseaux de différentes orientations sur le plan échantillon (70), les ensembles optiques (31, 32, 33) comportent des rotateurs de champ image et/ou des réseaux (31, 32, 33) dans différentes orientations les uns par rapport aux autres,
dans lequel, en formant des images de différentes orientations de réseaux, la lumière (15) diffractée par le premier réseau (31) à un premier ordre de diffraction et la lumière (15) diffractée par le deuxième réseau (32) à un premier ordre de diffraction sont incidentes sur différentes zones (55, 57) sur le premier miroir de combinaison de faisceaux (51), et
**en ce que** ces différentes zones (55, 57) sont formées par les zones réfléchissantes (55) et les zones transparentes (57), de sorte que la lumière (15) du premier ordre de diffraction est transmise à la fois par le premier réseau (31) et le deuxième réseau (32) en direction du plan échantillon (70).

8. Dispositif optique selon l'une des revendications 1 à 7, **caractérisé**
**en ce qu'**il est prévu des guides d'ondes optiques (26, 27) pour guider la lumière (15) depuis le dispositif de déviation (20) vers les ensembles optiques (31, 32, 33).

9. Dispositif optique selon la revendication 8, **caractérisé**
**en ce que** les guides d'ondes optiques (26, 27) conservent la polarisation,
**en ce que** chaque guide d'onde optique (26, 27) est disposé dans un alignement rotatif axial dans lequel une direction de polarisation de la lumière sortante (15) est parallèle à une direction des stries d'un réseau (31, 32, 33) sur lequel est incidente la lumière (15) sortant du guide d'onde optique (26, 27) respectif.

10. Dispositif optique selon la revendication 8 ou 9, **caractérisé**
**en ce qu'**il est prévu un dispositif acousto-optique (14) avant les guides d'ondes optiques (26, 27) et
**en ce que** les moyens de commande électroniques sont conçus pour faire varier une intensité lumineuse (15) à l'aide du dispositif acousto-optique (14) en fonction du guide d'ondes optiques (26, 27) vers lequel la lumière (15) est transmise, de sorte qu'une intensité lumineuse identique soit émise à l'aide de tous les guides d'ondes optiques (26, 27) ou bien, à l'arrière des miroirs de combinaison de faisceaux (51, 52), que les faisceaux lumineux (15) qui sont issus de différents ensembles optiques (31, 32, 33) présentent la même intensité lumineuse.

11. Dispositif optique selon l'une des revendications 1 à 10, **caractérisé**
**en ce que**, pour modifier un éclairage structuré qui est fourni à l'aide de l'un des ensembles optiques (31, 32, 33), il est prévu des moyens de réglage destinés à déplacer les ensembles optiques (31, 32, 33) indépendamment les uns des autres,
**en ce que**, pour réduire un temps d'interruption de la mesure, les moyens de commande électroniques sont conçus pour déplacer un ou plusieurs des ensembles optiques (31) pendant qu'un trajet optique vers un autre des ensembles optiques (32, 33) est sélectionné.

12. Dispositif optique selon l'une des revendications 1 à 11, **caractérisé**
**en ce que**, pour déphaser un éclairage structuré qui est fourni à l'aide de l'un des ensembles optiques (31, 32, 33), il est prévu au moins une lame de phase (41, 42, 43) qui peut être réglée de différentes manières et qui influence différemment une phase de la lumière d'éclairage structurée (15).

13. Dispositif optique selon la revendication 12, **caractérisé**
**en ce que**, pour réduire un temps d'interruption de la mesure, les moyens de commande électroniques sont conçus pour permuter l'une des lames de phase (41) situées dans le trajet optique de l'un des ensembles optiques (31) pendant qu'un trajet optique vers un autre ensemble optique (32, 33) est sélectionné.

14. Dispositif optique selon l'une des revendications 1 à 13, **caractérisé**
**en ce que**, pour fournir un éclairage à grand champ, les moyens de commande électroniques sont conçus pour dévier la lumière (15) vers un trajet de faisceau ne comportant pas de réseaux (31, 32, 33), et
**en ce qu'**il est prévu des moyens pour diriger alternativement la lumière (15) destinée à l'éclairage à grand champ et la lumière (15) issue des réseaux (31, 32, 33) vers un trajet optique commun en direction de l'échantillon (71).

15. Dispositif optique selon l'une des revendications 1 à 14, **caractérisé**
**en ce qu'**il est prévu une lentille de zoom (61) dans le trajet optique à l'arrière des miroirs de combinaison de faisceaux (51, 52) pour adapter un éclairage d'un objectif (65) du microscope optique.

16. Microscope optique
comportant un plan échantillon (70) dans lequel peut être positionné un échantillon (71) à examiner, et
au moins une source lumineuse (10) destinée à émettre de la lumière (15) en direction du plan échantillon (70), **caractérisé**
**en ce qu'**un dispositif optique selon l'une des revendications 1 à 15 est prévu entre la source lumineuse (10) et le plan échantillon (70) .

17. Microscope optique selon la revendication 16, **caractérisé**
**en ce que** l'un des miroirs de combinaison de faisceaux (51, 52) est disposé dans un plan de pupille ou
**en ce que** deux miroirs de combinaison de faisceaux (51, 52) sont disposés sur des côtés différents du plan de pupille.

18. Microscope optique selon la revendication 16 ou 17, **caractérisé**
**en ce qu'**il est prévu un miroir partiellement transparent (63) qui réfléchit la lumière (15) issue des miroirs de combinaison de faisceaux (51, 52) vers un échantillon (71) et transmet la lumière échantillon issue de l'échantillon (71) vers un moyen détecteur (80), et
**en ce que**, pour conserver une polarisation de la lumière (15), les miroirs de combinaison de faisceaux (51, 52) et le miroir partiellement transparent (63) sont agencés sous la forme d'un périscope.
